# EUROPEAN PATENT APPLICATION

(11) **EP 4 775 099 A1**
(43) Date of publication of application: **15.07.2026**
(21) Application number: 24802151.1
(22) Date of filing: 04.09.2024
(51) Int. Cl.: A47J 19/02, A47J 19/06

(54) **SCREW FOR JUICER AND JUICER COMPRISING SAME**

(30) Priority: 08.09.2023 KR 20230119863; 25.01.2024 KR 20240011894; 15.07.2024 KR 20240092806
(71) Applicant: NUC Electronics Co., Ltd., Daegu 41548 (KR)
(72) Inventor: KIM, Jong Boo, Daegu 41548 (KR)
(74) Representative: Cabinet Beau de Loménie
(86) International application number: PCT/KR2024/013291
(87) International publication number: WO 2025/053594

(57) **Abstract**

A screw for juicers and a juicer comprising the same are disclosed. The screw for juicers can eliminate inconvenience of cutting a juicing target in advance before feeding the juicing target and can stably convey and crush the juicing target through a spiral rib.

## Description

### TECHNICAL FIELD

Embodiments of the present invention relate to a screw for juicers and a juicer comprising the same, and more particularly to a screw for juicers, which can eliminate inconvenience of cutting a juicing target in advance before feeding the juicing target and can stably convey and crush the juicing target through a spiral rib, and a juicer comprising the same.

### BACKGROUND

As the number of people making their own green juice or fruit juice at home for health reasons increases, many devices capable of making it easy to juice vegetables and fruits at home are developed in the art.

A typical juicer extracts juice through a centrifugation method in which juicing materials are fed into the juicer and crushed by blades rotating at high speed. However, a high-speed crushing process of the typical juicer can destroy unique flavors and nutrients of the juicing materials, thereby making it difficult to make green juice from stems and leaves of vegetables, making it difficult to make juice from fruits, such as kiwi and strawberries due to high viscosity thereof, and making it impossible to make soy milk from soybeans.

To improve juicing efficiency of the juicer by addressing such problems, various studies have been conducted on components constituting the juicer.

In particular, since a screw directly crushes and squeezes a juicing target, the screw directly affects juicing efficiency of the juicer. Therefore, the structure of the screw is being actively studied in the art.

In the related art, a large-diameter juicer that does not require pre-cutting of a juicing material prior to feeding the juicing material into an inlet of the juicer has been developed, as disclosed in Korean Patent No. 10-1270140 (May 31, 2013). In the juicer of this patent, the inlet has an enlarged size to allow oversized materials to be crushed in advance through a crushing portion and a crushing processing unit such that the crushed materials can be fed to an eccentric side of an upper portion of a screw, thereby allowing juice extraction from the oversized materials without increasing the size of the screw.

However, even in this case, the inlet is formed in a shape that protrudes outwards from a location eccentric to one side of the screw instead of being placed at an upper portion of the screw, thereby causing increase in size of the juicer and a more complicated structure, particularly increase in vertical length of the screw due to formation of the crushing portion that crushes a juicing material fed to one side of the screw.

### <Related Literature>

### <Patent Document>

Korean Patent Registration No. 10-2014-0101193 (May 31 2013)
Korean Utility Model Registration No. 20-0491517 (April 20, 2020)

### SUMMARY

It is an aspect of the present invention to provide a screw for juicers, which eliminates inconvenience of cutting a juicing target in advance before the juicing target is fed thereto and allows sufficiently efficient feeding and conveying of materials, and a juicer comprising the same.

In accordance with one aspect of the present invention, a screw for juicers adapted to rotate about a screw shaft and having a spiral rib on an outer circumferential surface thereof includes: a crushing portion spaced apart from the screw shaft and extending upwards to one side in a radial direction to cut a juicing target, wherein the crushing portion may include a beveled surface extending above an upper end of the screw shaft and guiding an incoming juicing target, and a cutting portion having an inclined angle relative to the screw shaft to cut the juicing target.

In addition, the crushing portion may have a greater length than a radius of the screw to form an accommodation space so as to crush the juicing target while receiving the juicing target.

In addition, the crushing portion may include a conveying surface conveying the juicing target in a rotational direction of the screw.

In addition, an upper end of the spiral rib may be connected at one side thereof to a lower end of one side of the crushing portion to guide the juicing target conveyed on the conveying surface to the spiral rib.

In addition, the upper end of the spiral rib may be spaced apart at one side thereof from the lower end of one side of the crushing portion by a certain distance to form a conveying space and the juicing target crushed by the cutting portion may be conveyed to the spiral rib through the conveying space without stagnation.

In addition, the upper end of the spiral rib may form a cutting surface at the other side thereof to crush the juicing target while preventing the juicing target from escaping.

In addition, the crushing portion may be further provided at one side thereof with a crushing recess to cut the juicing target.

In addition, the cutting portion of the screw may be placed above the spiral rib of the screw to cut the juicing target before cutting through the spiral rib; and the beveled surface may be formed at one end thereof with a flow path.

In addition, the screw may further include: a guide spiral rib formed on the spiral rib of the screw, wherein the guide spiral rib may guide the juicing target firstly cut through the cutting portion of the crushing portion to be conveyed to the conveying surface and the conveying surface may convey the juicing target guided through the guide spiral rib.

In addition, the conveying surface of the crushing portion may be provided at a distal end thereof with an inclined surface inclined downwards in an inward direction such that the juicing target conveyed through the inclined surface is conveyed in a downward direction of the screw.

In addition, the screw may further include a flange formed on an outer surface of a lower end of the screw and having a greater width than a diameter of the screw to allow a filter sieve to be seated thereon, wherein the flange may be provided on an upper surface thereof with at least one discharge recess to discharge the juicing target processed between the screw and the filter sieve.

In addition, the screw may further include a discharge protrusion formed at the lower end thereof in a rotational direction to perform additional crushing of the juicing target.

In addition, the flange may be formed with a rib in a direction opposite to the rotational direction to facilitate additional cutting and discharge of the juicing target after conveying the juicing target to an upper end thereof.

In accordance with another aspect of the present invention, a juicer includes: a juicing drum receiving a filter sieve therein and coupled to an upper end of a main body of the juicer; a hopper coupled to an upper side of the juicing drum and including a hopper rib protruding from an inner surface thereof in a radial direction of the hopper, a lid being coupled to the hopper to allow a juicing target to be fed to the hopper through the lid; and a screw received inside the filter sieve to rotate about a screw shaft and formed with a spiral rib on an outer circumferential surface thereof to crush the juicing target received from the hopper, the screw including: a crushing portion spaced apart from the screw shaft and extending upwards to one side in the radial direction to cut the juicing target, wherein the crushing portion may include a beveled surface extending above an upper end of the screw shaft and guiding the juicing target being fed to the hopper, and a cutting portion having an inclined angle relative to the screw shaft to cut the juicing target.

In addition, the crushing portion may have a greater length than a radius of the screw to form an accommodation space so as to crush the juicing target while receiving the juicing target.

In addition, the crushing portion may include a conveying surface conveying the juicing target in a rotational direction of the screw.

In addition, an upper end of the spiral rib may be connected at one side thereof to a lower end of one side of the crushing portion to guide the juicing target conveyed on the conveying surface to the spiral rib.

In addition, the upper end of the spiral rib may be spaced apart at one side thereof from the lower end of one side of the crushing portion by a certain distance to form a conveying space and the juicing target crushed by the cutting portion may be conveyed to the spiral rib through the conveying space without stagnation.

In addition, the upper end of the spiral rib may form a cutting surface at the other side thereof to crush the juicing target while preventing the juicing target from escaping from the juicer.

In addition, the crushing portion may be further provided at one side thereof with a crushing recess having a shape corresponding to the hopper rib to cut the juicing target.

In addition, the cutting portion of the screw may be placed above the spiral rib of the screw to cut the juicing target before cutting through the spiral rib and the beveled surface may be formed at one end thereof with a flow path.

In addition, the screw may further include: a guide spiral rib formed above the spiral rib of the screw, wherein the guide spiral rib may guide the juicing target firstly cut through the cutting portion of the crushing portion to be conveyed to the conveying surface and the conveying surface may convey the juicing target guided through the guide spiral rib.

In addition, the conveying surface of the crushing portion may be provided at a distal end thereof with an inclined surface inclined downwards in an inward direction such that the juicing target conveyed through the inclined surface is conveyed in a downward direction of the screw.

In addition, the screw may further include a flange formed on an outer surface of a lower end thereof and having a greater width than a diameter of the screw to allow the filter sieve to be seated thereon, wherein the flange may be provided on an upper surface thereof with at least one discharge recess to discharge the juicing target processed between the screw and the filter sieve.

In addition, the screw may further include a discharge protrusion formed at the lower end thereof in a rotational direction to perform additional crushing of the juicing target.

In addition, the flange may be formed with a rib in a direction opposite to the rotational direction to facilitate additional cutting of the juicing target and residue and discharge after conveying the juicing target to an upper end thereof.

In addition, the flange may be provided at a lower end thereof with a seating groove and the juicing drum may be provided with a seating protrusion corresponding to the seating groove.

In addition, the flange may be formed on a lower end surface thereof with at least one irregularity to prevent residue from entering the screw.

In addition, the juicing drum may be provided at an upper end thereof with a hopper coupler coupled to the hopper and the hopper coupler may have a thickness gradually increasing in the rotational direction of the screw.

In addition, the hopper coupler of the juicing drum may be provided with an anti-releasing jaw to prevent the hopper from rotating in a reverse direction.

In addition, the hopper may be provided at a lower end thereof with a coupler coupled to the hopper coupler of the juicing drum and with a projection corresponding to the anti-releasing jaw.

In addition, the juicing drum may be formed on a bottom surface thereof with a guide rib around a lower end axis of the juicing drum to guide a coupling position when coupled to the main body.

In addition, the filter sieve may include a plurality of upper mesh pores formed at an upper side thereof and a plurality of lower mesh pores formed at a lower side thereof, wherein the upper mesh pores may be formed in a smaller distribution ratio than the lower mesh pores.

In addition, the upper mesh pores may have a larger size than the lower mesh pores.

In addition, the filter sieve may include at least one mesh-pore free surface.

According to the present invention, a structure for crushing a juicing target in advance is provided to the hopper and the screw, thereby eliminating inconvenience of cutting a juicing target in advance before feeding the juicing target while enabling efficient feeding and conveying of juicing materials.

Further, according to the present invention, a crushing portion extends above an upper end of the screw, which rotates at low speed, thereby reducing crushing load by crushing a juicing target before the juicing target reaches the spiral rib of the screw.

### BRIEF DESCRIPTION OF THE DRAWINGS

The above and other aspects, features, and advantages of the present invention will become apparent from the detailed description of the following embodiments in conjunction with the accompanying drawings:
FIG. 1 is a perspective view of a juicer according to one embodiment of the present invention;
FIG. 2 and FIG. 3 are exploded perspective views of the juicer according to the embodiment of the present invention;
FIG. 4 is a perspective view of a screw for the juicer according to the embodiment of the present invention;
FIG. 5 is a front view of the screw for the juicer according to the embodiment of the present invention;
FIG. 6 is a side view of the screw for the juicer according to the embodiment of the present invention;
FIG. 7 is a plan view of the screw for the juicer according to the embodiment of the present invention;
FIG. 8 is a view of a hopper including a hopper rib in the juicer according to the embodiment of the present invention;
FIG. 9 is a view illustrating a cutting process of the juicer according to the embodiment of the present invention, in which a crushing recess of the screw is formed corresponding to the hopper including the hopper rib;
FIG. 10 is a plan view of FIG. 9;
FIG. 11 is a cross-sectional view taken along line A-A shown in FIG. 10;
FIG. 12 is a perspective view of a juicer according to another embodiment of the present invention;
FIG. 13 and FIG. 14 are exploded perspective views of the juicer according to another embodiment of the present invention;
FIG. 15 is a perspective view of a screw for the juicer according to another embodiment of the present invention;
FIG. 16 is a front view of the screw for the juicer according to another embodiment of the present invention;
FIG. 17 is a side view of the screw for the juicer according to another embodiment of the present invention;
FIG. 18 is a plan view of the screw for the juicer according to another embodiment of the present invention;
FIG. 19 is a view of a hopper including a hopper rib and an extension rib in the juicer according to another embodiment of the present invention;
FIG. 20 is a view illustrating a cutting process of the juicer according to another embodiment of the present invention, in which a crushing portion of the screw is formed corresponding to the hopper including the hopper rib and the extension rib;
FIG. 21 is a plan view of FIG. 20;
FIG. 22 is a cross-sectional view taken along line B-B of FIG. 21;
FIG. 23 is a perspective view of a juicer according to a further embodiment of the present invention;
FIG. 24 and FIG. 25 are exploded perspective views of the juicer according to a further embodiment of the present invention;
FIG. 26 is a perspective view of a screw for the juicer according to a further embodiment of the present invention;
FIG. 27 is a front view of the screw for the juicer according to a further embodiment of the present invention;
FIG. 28 is a side view of the screw for the juicer according to a further embodiment of the present invention;
FIG. 29 is a plan view of the screw for the juicer according to a further embodiment of the present invention;
FIG. 30 is a view of a hopper including a hopper rib and an extension rib in the juicer according to a further embodiment of the present invention;
FIG. 31 is a view illustrating a cutting process of the juicer according to a further embodiment of the present invention, in which a crushing portion of the screw is formed corresponding to the hopper including the hopper rib and the extension rib;
FIG. 32 is a plan view of FIG. 31;
FIG. 33 is a cross-sectional view taken along line C-C of FIG. 32;
FIG. 34 and FIG. 35 are exploded perspective views of a juicer according to yet another embodiment of the present invention;
FIG. 36 is a perspective view of a screw for the juicer according to yet another embodiment of the present invention;
FIG. 37 is a front view of the screw for the juicer according to yet another embodiment of the present invention;
FIG. 38 is a side view of the screw for the juicer according to yet another embodiment of the present invention;
FIG. 39 is a bottom perspective view of the screw for the juicer according to yet another embodiment of the present invention;
FIG. 40 and FIG. 41 are views of a juicing drum of the juicer according to yet another embodiment of the present invention;
FIG. 42 and FIG. 43 are views of a hopper of the juicer according to yet another embodiment of the present invention;
FIG. 44 is a diagram illustrating a cutting process of the juicer according to yet another embodiment of the present invention, in which a crushing portion of the screw is formed corresponding to the hopper including a hopper rib;
FIG. 45 is a plan view of FIG. 44;
FIG. 46 is a cross-sectional view taken along line D-D of FIG. 44;
FIG. 47 is a view illustrating details of a filter sieve in the juicer according to yet another embodiment of the present invention;
FIG. 48 is a perspective view of a screw for the juicer according to yet another embodiment of the present invention;
FIG. 49 is a front view of the screw for the juicer according to yet another embodiment of the present invention;
FIG. 50 is a side view of the screw for the juicer according to yet another embodiment of the present invention;
FIG. 51 is a view of the hopper of the juicer according to yet another embodiment of the present invention;
FIG. 52 is a diagram illustrating a cutting process of the juicer according to yet another embodiment of the present invention, in which a crushing portion of the screw is formed corresponding to the hopper including a hopper rib;
FIG. 53 is a plan view of FIG. 52; and
FIG. 54 is a cross-sectional view taken along line E-E of FIG. 53.

### DETAILED DESCRIPTION OF EMBODIMENTS

Hereinafter, exemplary embodiments of the present invention will be described in detail with reference to the accompanying drawings. It should be understood that the following embodiments are given by way of illustration to provide a thorough understanding of the present disclosure to those skilled in the art and the present invention is not limited to the following embodiments and may be embodied in different ways.

The terminology is used herein for the purpose of describing particular embodiments only and is not intended to be limiting of the invention. For example, it will be further understood that the terms "comprise," "include," and/or "have(has)" as used in this specification, specify the presence of stated features, steps, operations, elements, and/or components, but do not preclude the presence or addition of one or more other features, steps, operations, elements, components, and/or groups. Further, the singular forms "a," "an" and "the" are intended to include the plural forms as well, unless context clearly indicates otherwise.

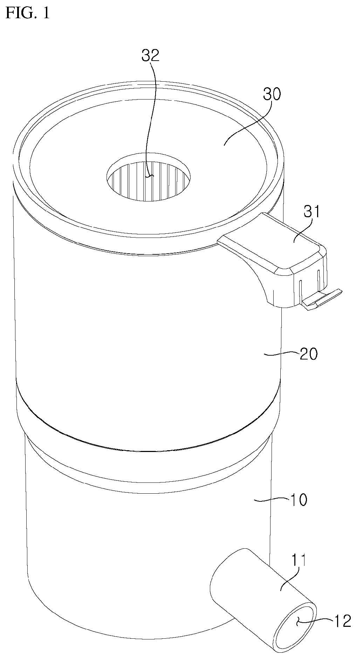

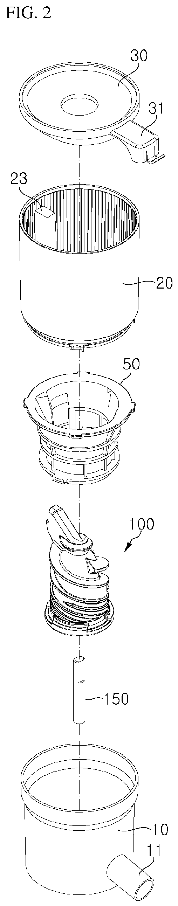

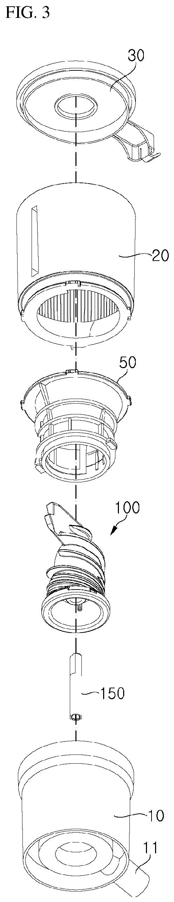

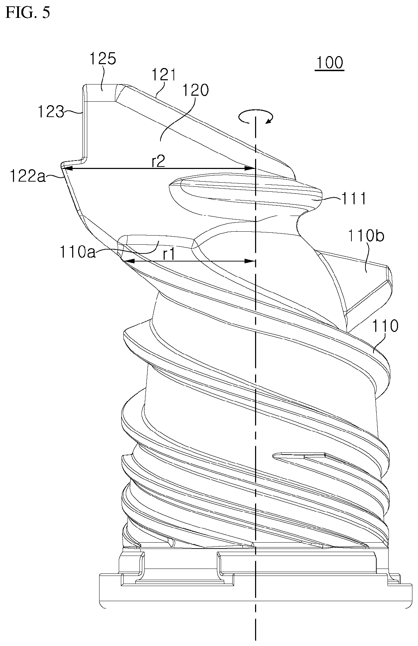

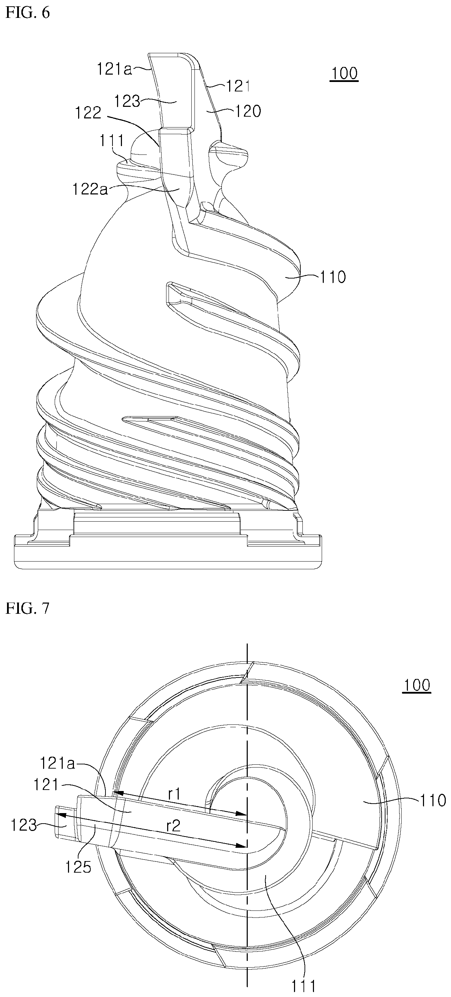

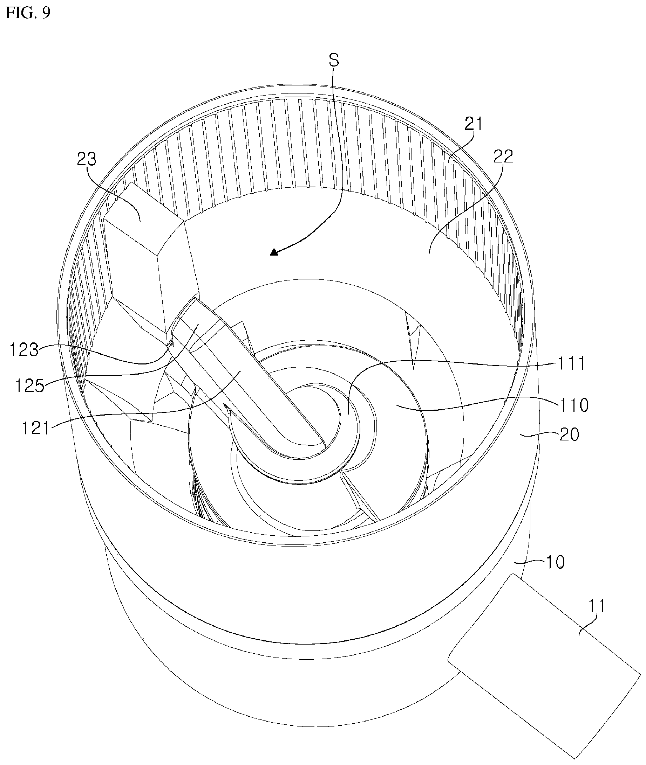

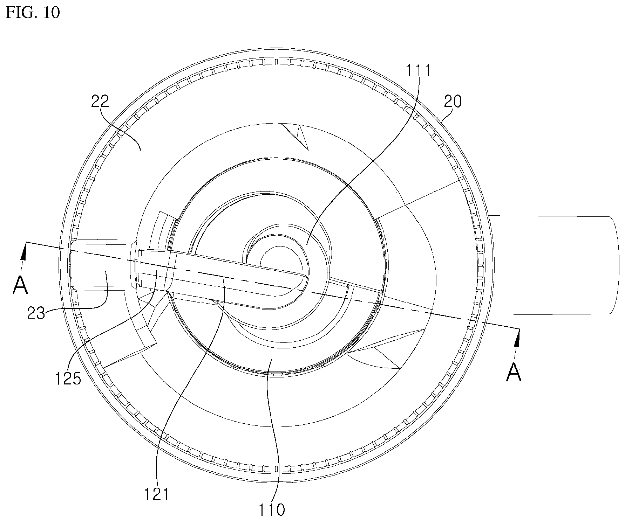

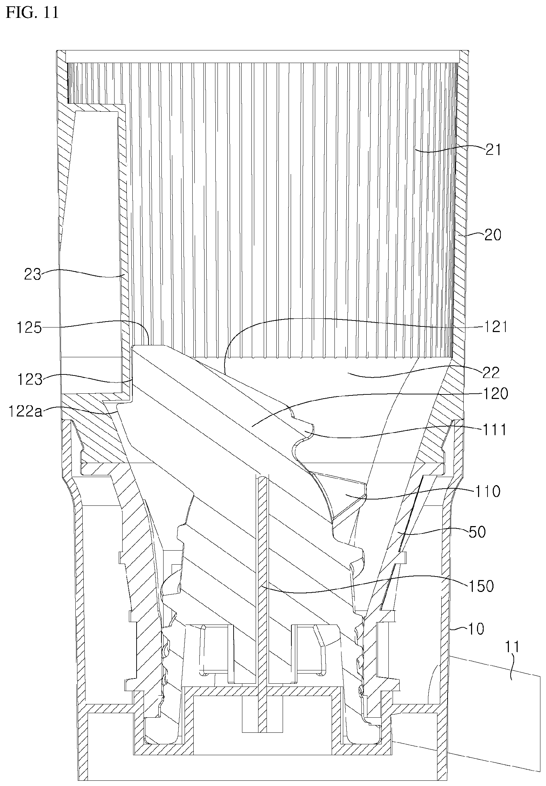

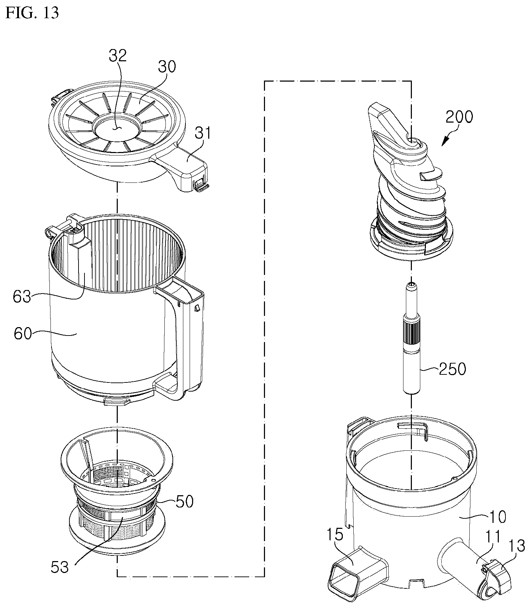

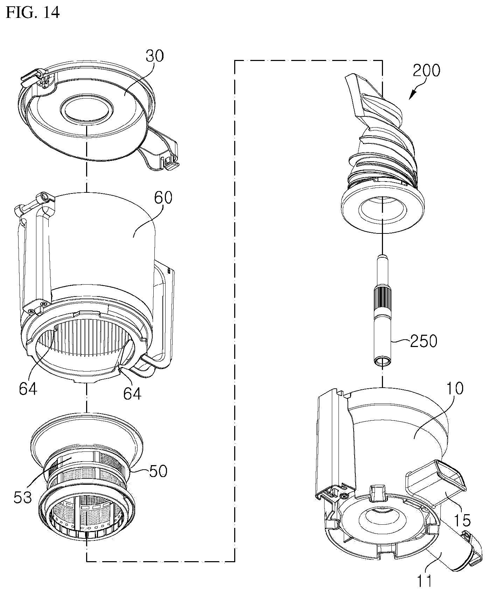

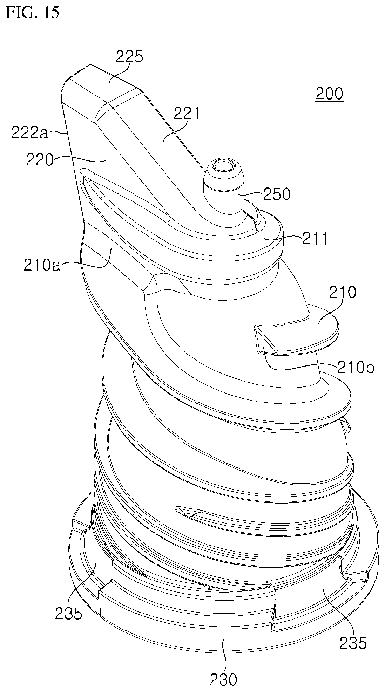

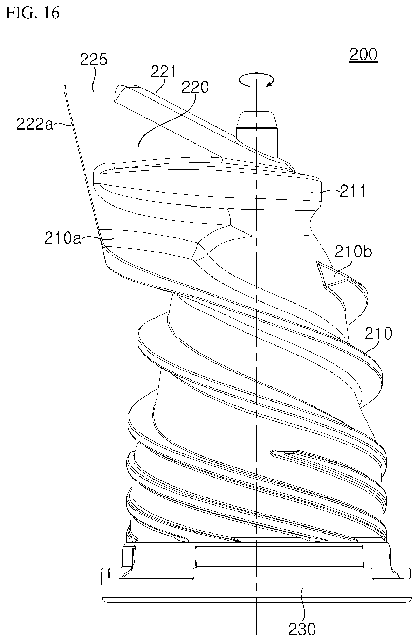

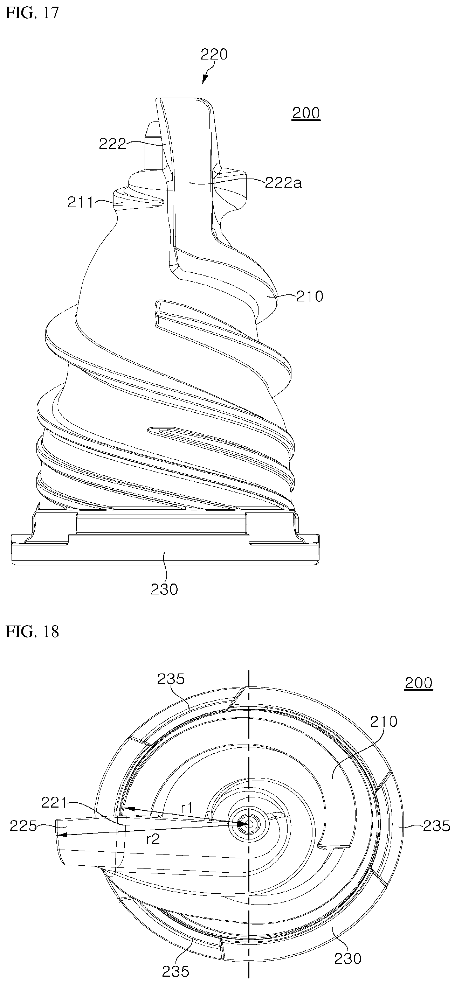

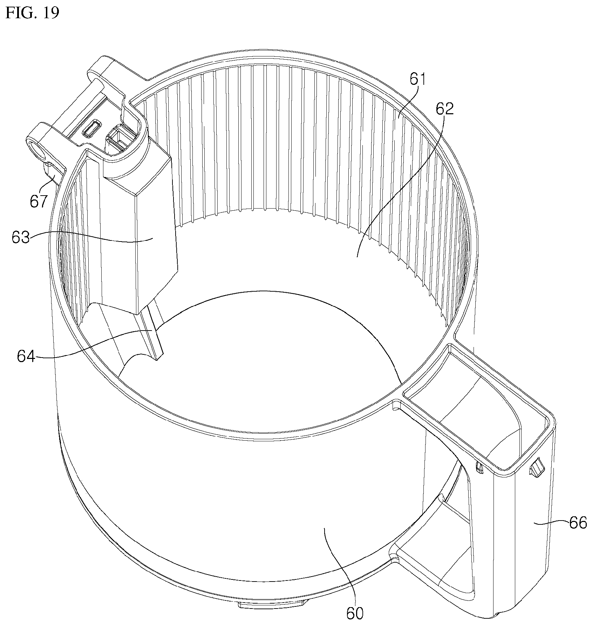

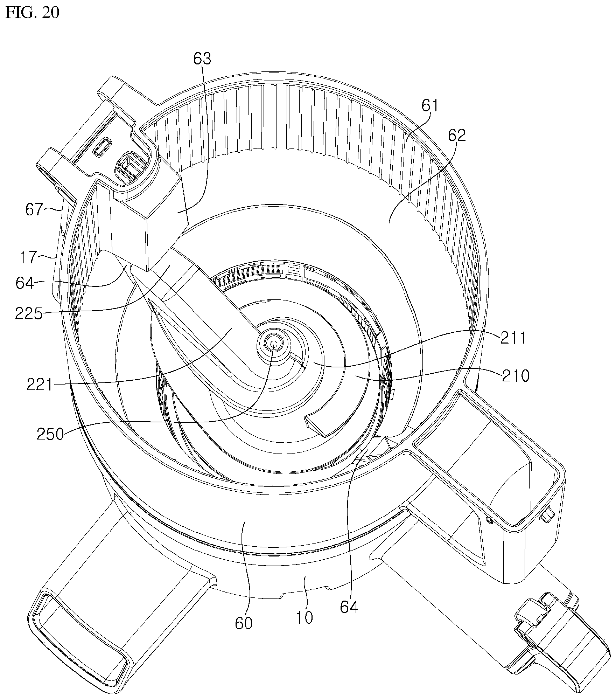

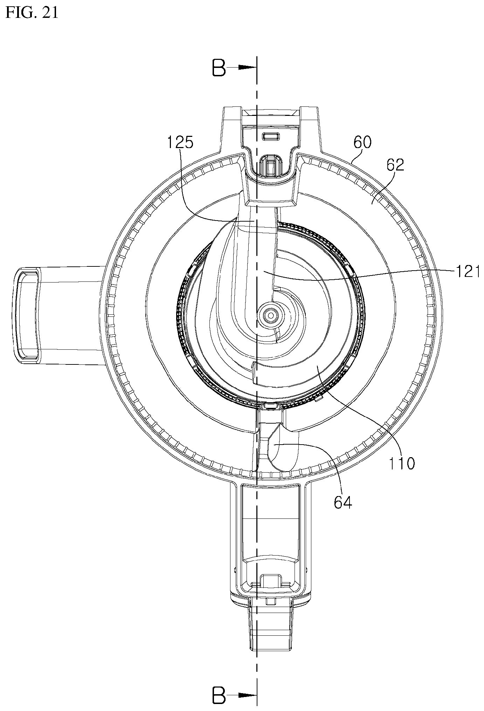

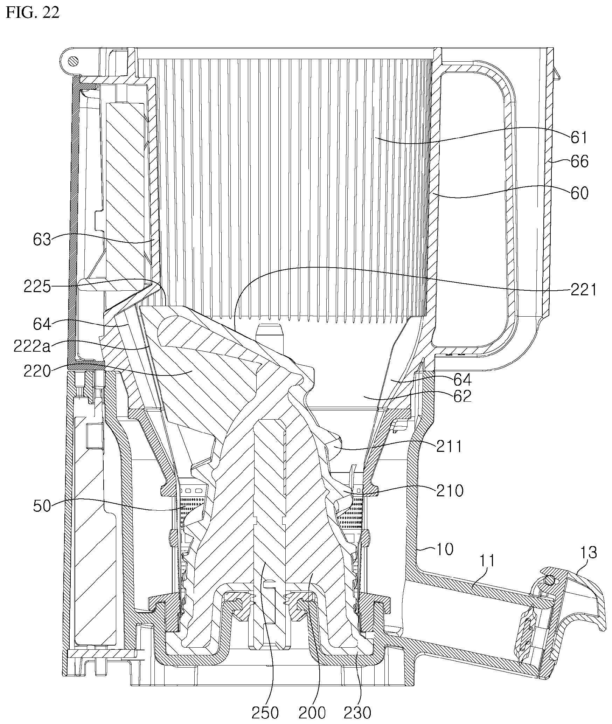

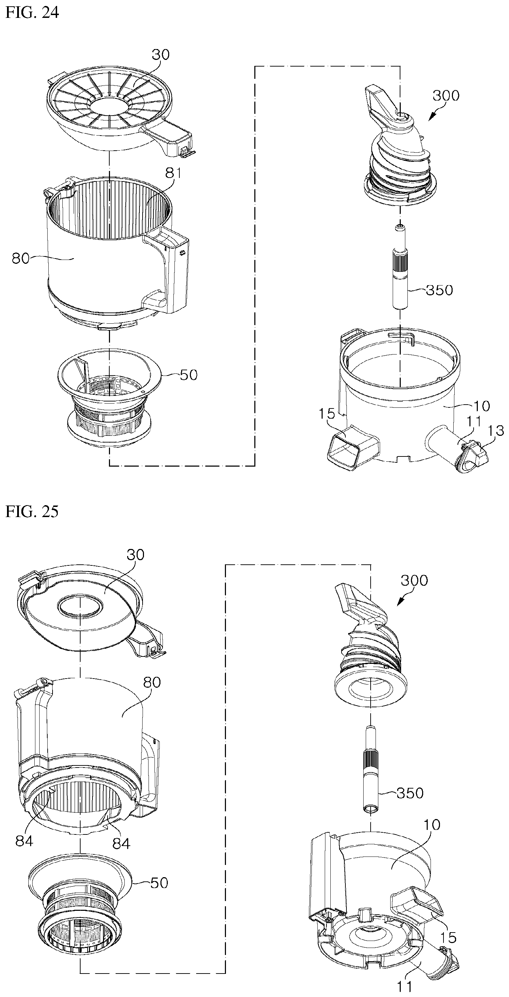

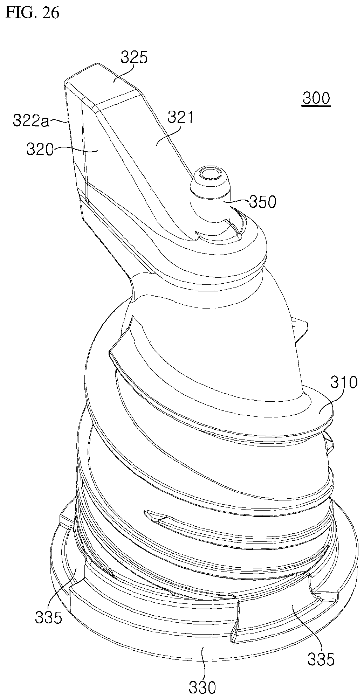

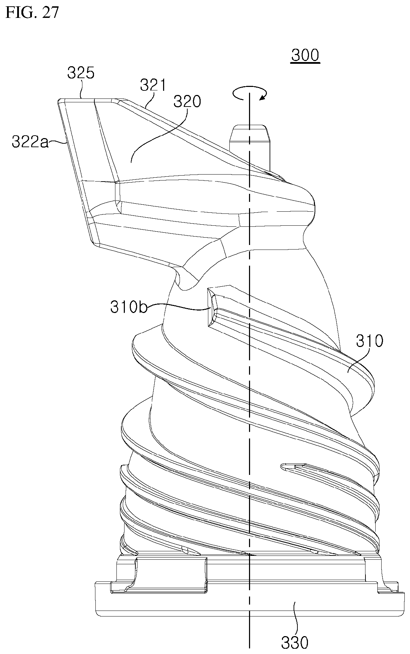

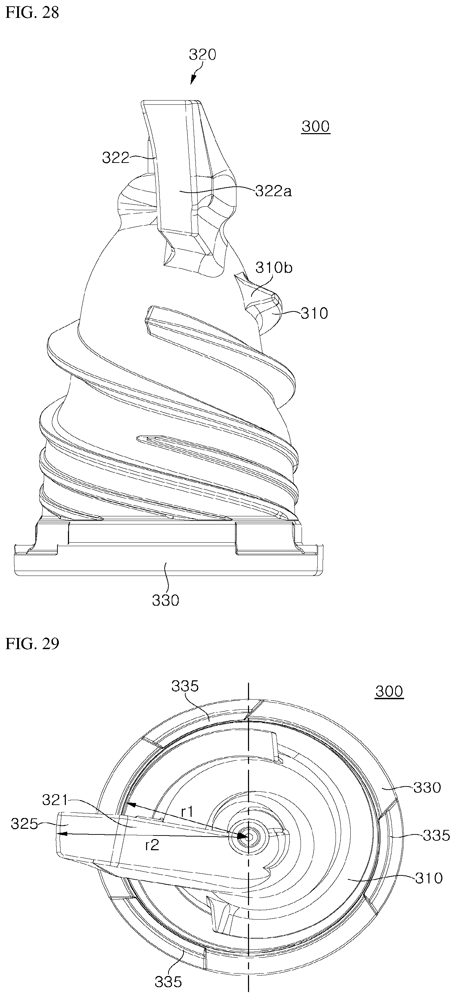

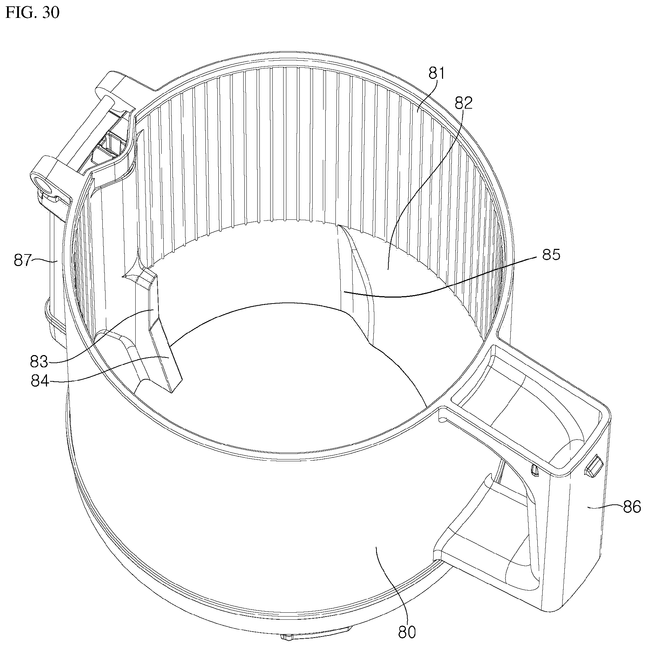

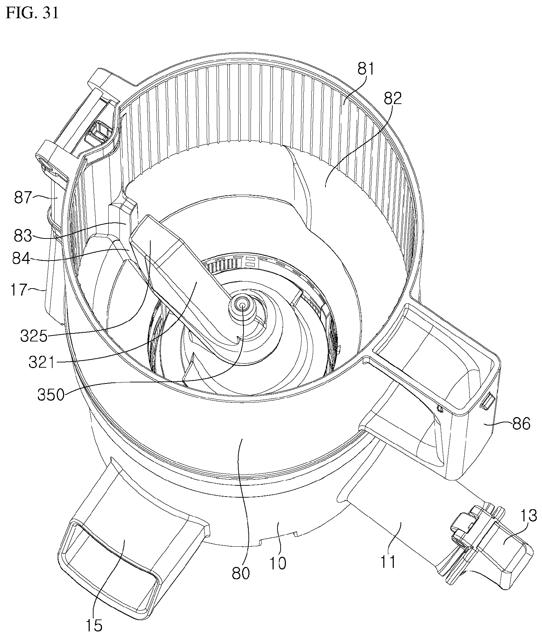

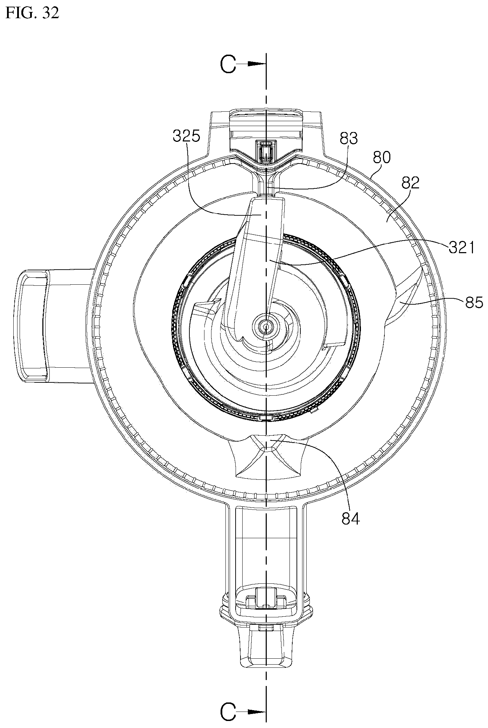

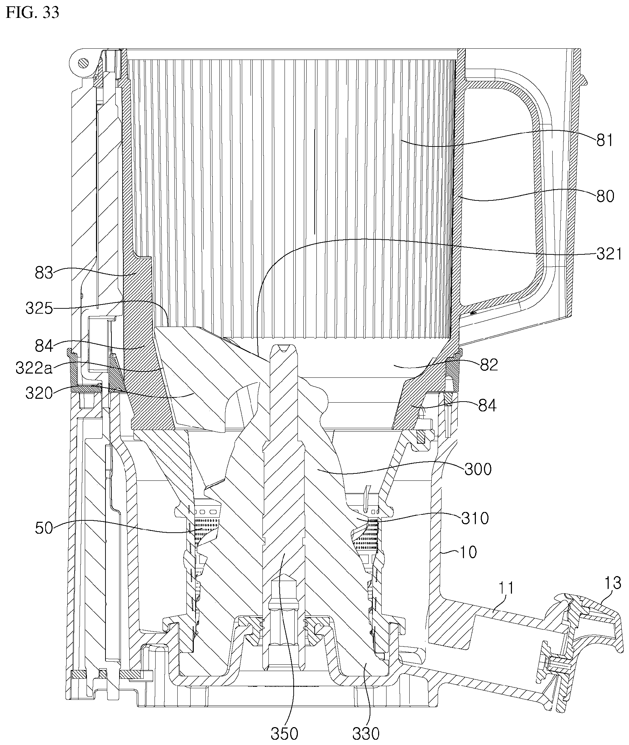

Referring now to FIG. 1 to FIG. 33, a screw for juicers according to the present invention and a juicer including the same are shown.

In accordance with one aspect of the present invention, a juicer includes all or part of a main body (not shown), a juicing drum 10, a hopper 20, a lid 30, a filter sieve 50, and a screw 100.

More specifically, referring to FIG. 1 to FIG. 3, a juicer according to one embodiment includes a juicing drum 10, which receives a filter sieve 50 therein and is coupled to an upper end of a main body (not shown); a hopper 20 coupled to an upper side of the juicing drum 10 and including a hopper rib 23 protruding from an inner surface thereof in a radial direction of the hopper 20, a lid being coupled to the hopper 20 to allow a juicing target to be fed to the hopper 20 through the lid; and a screw 100 received inside the filter sieve 50 to rotate about a screw shaft 150 and formed with a spiral rib on an outer circumferential surface thereof to crush the juicing target received from the hopper.

The main body may be provided with a drive motor that generates driving force and a reducer that transmits the driving force to a drive shaft. The drive shaft transmits power to the screw.

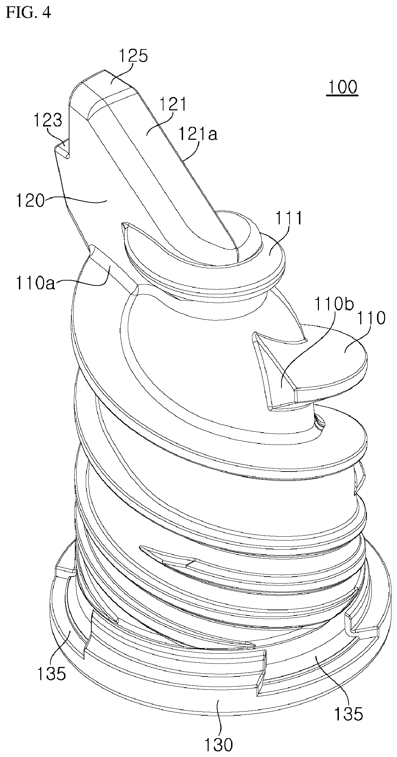

Referring to FIG. 4 to FIG. 7, the screw 100 includes a plurality of spiral ribs 110 formed on a body thereof and having various heights in the form of threads to convey a juicing target downwards through the spiral ribs 110 upon rotation thereof.

Here, the spiral ribs 110 may have thicknesses gradually increasing towards an upper end of the screw while gradually decreasing towards a lower end of the screw.

With this structure, the screw 100 interacts with an inner structure of the juicer (within the hopper or inside a juicing net) in an overall zone thereof to perform cutting/crushing/grinding/squeezing/juicing functions. In an upper zone of the screw, the spiral ribs have thick thicknesses to perform the functions of cutting and crushing a juicing target, and in a lower zone of the screw, the spiral ribs are arranged more densely and have gradually decreasing thicknesses in a downward direction to perform the functions of squeezing and juicing while crushing the juicing target.

In addition, the screw 100 may include a crushing portion 120 spaced apart from the screw shaft 150 and extending upwards to one side in a radial direction thereof and cutting the juicing target.

The spiral ribs 110 are formed only in a region corresponding to the filter sieve 50 and serve to convey the juicing in a downward direction of the screw 100 while crushing/squeezing the juicing target, which is received inside the filter sieve 50 after passing through the crushing portion 120 of the screw 100. Preferably, the spiral ribs 110 are formed so as not to extend beyond an upper end of the filter sieve 50.

The crushing portion 120 preferably has a plate shape, which is elongated in a vertical direction, and may be formed over a lower inner circumferential region of the hopper 20 in an upper zone of the filter sieve 50 or may be formed only in the lower inner circumferential region of the hopper 20.

For example, if the crushing portion 120 has a spiral-shaped blade, there is a risk of breaking a screw blade when a whole juicing target is fed directly into an input port open at an upper portion of the juicer.

Accordingly, the crushing portion 120 interacting with the hopper rib 23 within the hopper 20 may be formed to have a large area such that force generated upon crushing the whole juicing target can be evenly distributed over the surface of the crushing portion 120, thereby providing an effect of stably pre-crushing the juicing target without breakage of the screw 100 while conveying the juicing material to the spiral ribs in a zone where the filter sieve 50 is placed.

The crushing portion 120 may include a beveled surface 121 that extends above an upper end of the screw shaft and guides an incoming juicing target, a cutting portion 121a that has an inclined angle with respect to the screw shaft to cut the juicing target, and a conveying surface 122 that conveys the juicing target in the rotational direction of the screw.

The conveying surface 122 of the crushing portion 120 may have an inclined angle. Accordingly, the crushing portion 120 can crush the juicing target through contact with the conveying surface 122 while rotating and can convey the juicing target while sequentially crushing the juicing target along the inclined angle of the conveying surface 122, when the juicing target is caught by the hopper rib 23 within the hopper 20.

In this structure, the crushing portion 120 is configured in the form of a surface-contact blade rather than a spiral blade to drag and convey the juicing target to the conveying surface.

That is, the spiral blade makes linear contact with the juicing material and thus passes through the juicing material while cutting the juicing material, whereas the crushing portion 120 having a surface-contact blade shape drags the juicing target over a large area and finally has an effect of effectively conveying the juicing material downwards.

In addition, the conveying surface 122 may have a very slightly concave region at a center thereof so as to accommodate the juicing target in the rotational direction of the screw 100. With this structure, the conveying surface 122 can accommodate the juicing target, whereby the crushing portion 120 can hold the juicing target to allow the cutting portion 121a to easily cut the juicing target.

The cutting portion 121a is disposed at one side of the beveled surface 121 in the rotational direction of the screw to cut the juicing target through rotation of the screw.

In addition, a crushing recess 123 is disposed corresponding to the hopper rib 23 at one side of the crushing portion 120 to cut the juicing target.

The cutting portion 121a of the screw 100 may be placed above the spiral ribs 110 of the screw 100 to firstly cut the juicing target before the juicing target is cut through the spiral ribs 110.

In addition, a flow path 125 is formed at one end of the beveled surface 121 to reduce manufacturing costs through reduction in height of the screw while reducing load of the hopper rib 23 and the screw 100.

The crushing portion 120 of the screw 100 may be spaced apart from the screw shaft 150 and extends upwards to one side in the radial direction and may extend longer than a radial length of the screw to define an accommodation space S by an extension distance to cut the juicing target.

Accordingly, the crushing portion 120 may have a greater length r2 than a radius r1 of the screw 110 to define the accommodation space S such that the juicing target can be crushed in an accommodated state.

This structure facilitates crushing of the juicing target in an accommodated state through the accommodation space S while preventing the juicing target from escaping from the juicer even when the juicing target has a large size.

In addition, an upper end of the spiral rib 110 of the screw 100 may be connected at one side 110a thereof to a lower end of one side of the conveying surface 122 of the crushing portion 120 to guide the juicing target being conveyed along the conveying surface 122 to the spiral rib 110.

In other words, when a juicing target is fed, the juicing target is accommodated in an open space with reference to an upper end of the screw shaft and is guided and conveyed to the accommodation space along the beveled surface 121 of the crushing portion 120, which protrudes into the open space, while being firstly cut through the cutting portion 121a, and is then conveyed to the plate-shaped conveying surface 122 to be crushed and conveyed to the spiral ribs, whereby the juicing target can be sequentially conveyed downwards from the open space to be completely crushed.

In addition, the upper end of the spiral rib 110 of the screw 100 may form a cutting surface 110b at the other side thereof to crush the juicing target while preventing the juicing target from escaping from the juicer.

In other words, the upper end of the spiral rib 110 of the screw 100 forms a polygonal ( 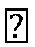 ) cutting surface 110b at the other side thereof, thereby providing an effect of effectively crushing the juicing target while dragging the juicing target.

This structure allows the juicing target to be conveyed through the conveying surface 122 of the crushing portion 120 and to be crushed on the spiral ribs 110 while dragging the juicing target so as to prevent the juicing target from escaping from the juicer when the juicing target tends to escape therefrom during crushing.

Accordingly, the crushing portion extending above an upper end of the screw rotating at low speed reduces crushing load on the screw by firstly crushing the juicing target before the juicing target reaches the spiral ribs of the screw, thereby reducing the load of the motor driving the juicer.

In addition, the cutting portion 121a has an inclined angle such that the juicing target is cut through the cutting portion 121a after first contacting the cutting portion 121a and is then conveyed through the conveying surface in a direction of the screw in which the spiral ribs are formed, thereby preventing the juicing target from splashing when the juicing target is cut.

The juicer may further include a guide spiral rib 111 formed above the spiral ribs 110 of the screw 100.

Specifically, the guide spiral rib 111 guides the juicing target, which has been firstly cut through the cutting portion 121a of the crushing portion 120, to be conveyed to the conveying surface 122, which can convey the juicing target guided through the guide spiral rib 111.

The guide spiral rib 111 may extend to an end of an outer circumferential surface opposite to the conveying surface 122 of the crushing portion 120 and may act as a reinforcing rib to prevent the crushing portion 120 from being broken under the pressure of crushing the juicing target.

In addition, the conveying surface 122 of the crushing portion 120 may be provided at a distal end thereof with an inclined surface 122a inclined downwards in an inward direction such that the juicing target conveyed through the inclined surface 122a can be conveyed in a downward direction of the screw 100.

In addition, the spiral rib 110 may be connected at one side 110a thereof to the conveying surface 122 of the crushing portion 120 such that the juicing target conveyed through the conveying surface 122 can be moved toward the spiral rib 110 to allow efficient crushing.

In addition, the cutting portion 121a of the crushing portion 120 may be placed above the conveying surface 122 to firstly cut and crush the juicing target through the cutting portion 121a and convey the juicing target through the conveying surface 122 such that the conveyed juicing target can be secondly crushed through the spiral ribs 110.

As such, the juicer can firstly cut the juicing target through the cutting portion of the crushing portion 120, secondly cut the juicing target through the crushing recess 123 and the hopper rib 23, convey the juicing target through the conveying surface 122, and thirdly crush the juicing target through the spiral ribs 110.

With this structure, the juicer can eliminate inconvenience of cutting a juicing target in advance before the juicing target is fed thereto and can provide an effect of efficiently feeding and conveying the juicing target.

In addition, the screw 100 may be formed on an outer surface of a lower end thereof with a flange 130 having a greater width than a diameter of the screw 100 to allow the filter sieve 50 to be seated thereon.

The flange 130 may support the screw 100 in the radial direction so as to allow the screw 110 to rotate stably without wobbling and the filter sieve 50 seated on the flange 130 may press the screw 100 to prevent the screw 100 from moving upwards upon rotation.

In addition, the flange 130 may be provided on an upper surface thereof with at least one discharge recess 135 to discharge the juicing target processed between the screw 100 and the filter sieve 50, and the juicing target may be discharged through the discharge recess 135 formed on the flange 130 while the screw rotates.

In addition, as shown in the drawings, the filter sieve 50 may be provided with a plurality of discharge recesses 135 to facilitate seating of the filter sieve 50 regardless of a coupling direction thereof.

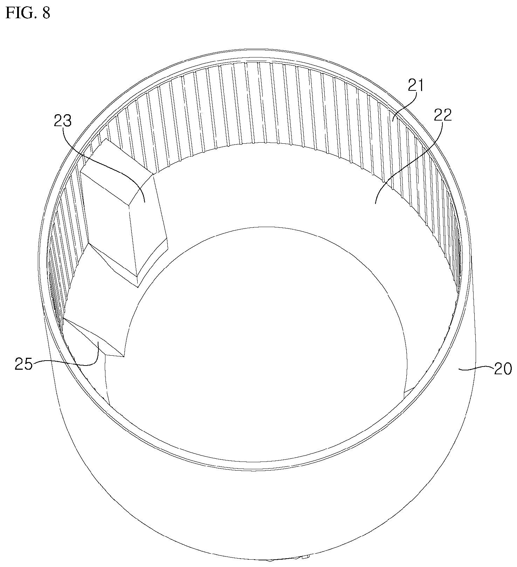

Referring to FIG. 8 to FIG. 11, the hopper 20 may be provided with bumps 21 on an inner wall thereof to prevent a moisture-laden juicing target from sticking to the inner wall of the hopper 20.

Further, the hopper 20 is formed at a lower portion thereof with an inwardly tapered guide surface 22 to guide the juicing target towards the screw 100 when the juicing target is fed to the hopper.

The guide surface 22 may be inclined toward the center of the hopper 20 to naturally connect the hopper 20 and a juicing net such that the juicing target fed to the hopper 20 can be smoothly conveyed to the juicing zone.

In addition, the guide surface 22 may be provided with at least one recess 25 in a region of an inner circumferential surface thereof.

Since the juicer generally generates a very high pressure in the juicing zone, a large load can be generated in the juicing zone when pre-crushing is not properly performed, thereby causing the juicing net to burst or the motor to stop. Accordingly, since it is important to process the juicing target to an appropriate size, the juicing target, which has been processed once through interaction between the hopper rib 23 and the crushing portion 120, may be processed once more through the recess 25 when the juicing target is conveyed along the guide surface 22 to the filter sieve 50 placed in the juicing zone.

When the guide surface 22 consists of a smooth surface without any bends, there is no structure capable of blocking the juicing target during rotation of the screw and the juicing target can only run idle, thereby preventing cutting/crushing from being efficiently performed. Accordingly, the recess 25 allows the crushing portion 120 of the screw 100 to efficiently cut and crush the juicing target.

Furthermore, in order for the crushing portion 120 of the screw 100 to efficiently crush the juicing target, the hopper 20 is provided on the inner surface thereof with the hopper rib 23. In other words, since the juicing target is cut through interaction between the crushing recess 123 and the hopper rib 23, the juicing target is processed (cut and crushed) on the inner surface of the hopper 20.

Accordingly, the hopper is provided with the hopper rib 23 protruding inwards from the inner surface thereof such that the crushing portion 120 can effectively crush the juicing target, thereby achieving reduction in size of the screw 100 and more effective crushing of the juicing target.

The hopper rib 23 may extend from the uppermost end of the hopper 20 to the guide surface 22 in a vertical direction and a safety sensor (not shown) may be disposed in an inner space of the hopper rib 23 to detect opening and closing of the lid 30.

In addition, the crushing portion 120 may be provided with the crushing recess 123 corresponding to the hopper rib 23 to minimize processing load and efficiently crush the juicing target when the juicing target is processed by the hopper.

The screw 100 for juicers according to the present invention rotates about the screw shaft 150 and includes the spiral ribs 110 on the outer circumferential surface thereof. The screw 100 may include the crushing portion 120 spaced apart from the screw shaft 150 and extending upwards in the radial direction thereof to crush the juicing target.

Further, the crushing portion 120 may include the beveled surface 121 extending above the upper end of the screw shaft and guiding an incoming juicing target, the cutting portion 121a having an inclined angle relative to the screw shaft to cut the juicing target, and the conveying surface 122 conveying the juicing target in the rotational direction of the screw.

The beveled surface 121 may guide the juicing target placed in an open space defined in an inner space of the hopper at an upper end of the screw shaft to the conveying surface 122 of the crushing portion 120.

Further, the crushing portion 120 is provided at one side thereof with the crushing recess 123 corresponding to the hopper rib 23 of the juicer to cut the juicing target.

In the screw 100 for juicers according to one aspect of the present invention, the cutting portion 121a of the screw 100 is placed above the spiral ribs 110 of the screw 100 to cut the juicing target before the juicing target is cut through the spiral ribs 110 and the flow path 125 is formed at one end of the beveled surface 121 to reduce the height of the screw 100, thereby achieving reduction in manufacturing costs and load on the screw during cutting.

In other words, by reducing the height of the screw 100, not only the weight or size of the screw 100 but also the height of the hopper 20 can be reduced, thereby reducing overall manufacturing costs of the screw 100, and it is possible to prevent deterioration in durability of the screw due to a heavy load which can be applied to a distal end of the beveled surface 121 when the beveled surface 121 extends to the interior of the hopper.

In addition, the screw 100 may further include a guide spiral rib 111 formed above the spiral rib 110 thereof to guide a juicing target, which has been firstly cut through the cutting portion 121a of the crushing portion 120, to be conveyed to the conveying surface 122 such that the conveying surface 122 can stably convey the juicing target guided by the guide spiral rib 111.

In addition, the conveying surface 122 of the crushing portion 120 may be provided at a distal end thereof with the inclined surface 122a inclined downwards in the inward direction such that the juicing target conveyed through the inclined surface 122a can be conveyed in the downward direction of the screw 100 to be crushed through the spiral ribs.

The cutting portion 121a and the crushing recess 123 of the crushing portion 120 may be placed above the conveying surface 122 to prevent splashing during cutting and crushing of the juicing target, which is firstly cut through the cutting portion and is secondly crushed through the crushing recess 123, and to stably convey the juicing target to the spiral rib 110 to be thirdly crushed through the spiral rib 110.

Furthermore, the crushing portion 120 of the screw 100 is spaced apart from the screw shaft 150 while extending upwardly in the radial direction, thereby securing the accommodation space S by a separation distance.

Accordingly, the length of the crushing portion 120 is greater than the radius of the screw 100 to form the accommodation space S such that the juicing target can be crushed in an accommodated state. Accordingly, even when the juicing target has a large size, the accommodation space S prevents the juicing target from deviating from an accommodated state, thereby facilitating crushing of the juicing target.

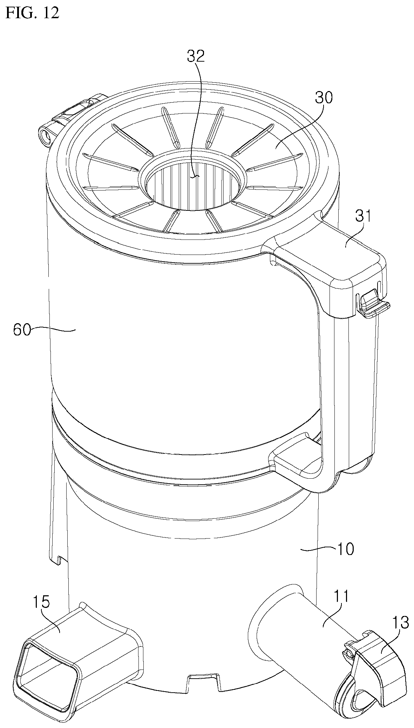

Next, referring to FIG. 12 to FIG. 22, a juicer according to another embodiment includes: a juicing drum 10, which receives a filter sieve 50 therein and is coupled to an upper end of a main body (not shown); a hopper 60 coupled to an upper side of the juicing drum 10 and including a hopper rib 63 protruding from an inner surface thereof in a radial direction of the hopper 60, a lid being coupled to the hopper 60 to allow a juicing target to be fed to the hopper 60 through the lid; and a screw 200 received inside the filter sieve 50 to rotate about a screw shaft 250 and formed with a spiral rib 210 on an outer circumferential surface thereof to crush the juicing target received from the hopper 60.

In the juicer according to this embodiment described above, some or all of the configurations of the juicing drum 10, the hopper 60, and the screw 200 may be substituted.

The juicing drum 10 may further include a residue discharge port 15 in addition to a juice discharge port 11.

In the juicer according to this embodiment, the hopper 60 may be provided with bumps 61 on an inner wall thereof to prevent a moisture-laden juicing target from sticking to the inner wall of the hopper 60.

In addition, the hopper 60 is formed at a lower portion thereof with an inwardly tapered guide surface 62 to guide the juicing target to the screw 100 through the guide surface 62 when the juicing target is input.

In addition, the guide surface 62 may be provided with at least one recess 65 in a region of an inner circumferential surface thereof.

Further, in order for the crushing portion 220 of the screw 200 to efficiently crush the juicing target, the hopper 60 is provided on the inner surface thereof with a hopper rib 63 and the juicing target is processed (cut and crushed) through the inner surface of the hopper 60.

In addition, an extension rib 64 may be disposed below the hopper rib 63 with a step interposed therebetween.

The extension rib 64 extends from the hopper rib 63 to improve processing efficiency by crushing the juicing target to a suitable size before sending the juicing target to the juicing zone and serves to convey the juicing target downwards.

The hopper rib 63 may extend from the uppermost end of the hopper 60 to the guide surface 62 in the vertical direction and a safety sensor (not shown) may be disposed in an inner space of the hopper rib 63 to detect opening and closing of the lid 30.

The extension rib 64 may be continuous with the hopper rib 63 or may be disposed independently on the guide surface 62.

The screw 200 may include a plurality of spiral ribs 210 formed on a body thereof and having various heights in the form of threads to convey the juicing target downwards through the spiral ribs 210 upon rotation thereof.

In addition, the screw 200 may include a crushing portion 220 spaced apart from the screw shaft 250 and extending upwards to one side in a radial direction of the screw 200 and cutting the juicing target.

Further, the crushing portion 220 may include a beveled surface 221 that extends above an upper end of the screw shaft and guides an incoming juicing target, a cutting portion 221a that has an inclined angle with respect to the screw shaft to cut the juicing target, and a conveying surface 222 that conveys the juicing target in the rotational direction of the screw.

The cutting portion 221a is disposed at one side of the beveled surface 221 in the rotational direction of the screw to cut the juicing target through rotation of the screw.

In addition, the cutting portion 221a of the screw 200 may be placed above the spiral rib 210 of the screw 200 to firstly cut the juicing target before the juicing target is cut through the spiral ribs 210.

In addition, the conveying surface 222 of the crushing portion 220 may be provided at a distal end thereof with an inclined surface 222a inclined downwards in an inward direction such that the juicing target conveyed through the inclined surface 222a can be conveyed in a downward direction of the screw 100.

A typical screw includes an upper blade protruding in a horn shape to stab and crush a juicing target as a main purpose. However, since the typical screw has a stabbing and crushing structure, the typical screw has a problem in that the juicing target can be stabbed to form only holes without being crushed and can run idle and, even if the juicing target is crushed into multiple pieces, the crushed pieces run idle in an upper zone of the screw instead of being conveyed downwards. To prevent this problem, since the screw 200 according to this embodiment cuts the juicing target while allowing the cut/crushed juicing target to settle on the conveying surface and be conveyed downwards, the screw 200 can minimize scattering of the crushed juicing target and can secure stable juicing by smoothly conveying the juicing target to the juicing zone.

In addition, the screw shaft 250 may have a protruding upper end to prevent overfeeding of a juicing target to a juicing zone when the juicing target is conveyed along the beveled surface 221.

Further, the upper end of the screw shaft 250 may be placed lower than the uppermost end of the crushing portion 220.

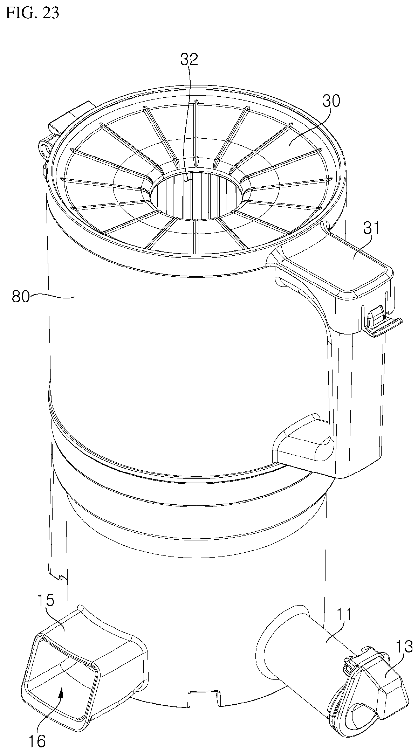

Next, referring to FIG. 23 to FIG. 33, a juicer according to a further embodiment of the present invention includes: a juicing drum 10, which receives a filter sieve 50 therein and is coupled to an upper end of a main body (not shown); a hopper 80 coupled to an upper side of the juicing drum 10 and including a hopper rib 83 protruding from an inner surface thereof in a radial direction of the hopper 80, a lid being coupled to the hopper 80 to allow a juicing target to be fed to the hopper 80 through the lid; and a screw 300 received inside the filter sieve 50 to rotate about a screw shaft 350 and formed with a spiral rib 310 on an outer circumferential surface thereof to crush the juicing target received from the hopper 80.

In the juicer according to this embodiment described above, some or all of the configurations of the hopper 80 and the screw 300 may be substituted

In the juicer according to this embodiment, the hopper 80 may be provided with bumps 81 on an inner wall thereof to prevent a moisture-laden juicing target from sticking to the inner wall of the hopper 80.

In addition, the hopper 80 is formed at a lower portion thereof with an inwardly tapered guide surface 82 to guide the juicing target to the screw 300 through the guide surface 82 when the juicing target is input.

In addition, the guide surface 82 may be provided with at least one recess 85 in a region of an inner circumferential surface thereof

Further, in order for the crushing portion 320 of the screw 300 to efficiently crush the juicing target, the hopper 80 is provided on the inner surface thereof with a hopper rib 83 and the juicing target is processed (cut and crushed) through the inner surface of the hopper 80.

In addition, an extension rib 84 may extend from the hopper rib 83 to a distal end of the guide surface 82 without a step therebetween.

The extension rib 84 extends from the hopper rib 83 to improve processing efficiency by crushing the juicing target to a suitable size before sending the juicing target to the juicing zone and serves to convey the juicing target downwards.

The extension rib 84 may be continuous with the hopper rib 83 or may be disposed independently on the guide surface 82.

In addition, since the juicing target cut/crushed by the hopper rib 83 is processed once more just before being conveyed to the juicing zone, the juicing target can be advantageously processed to a more suitable size for juicing, and since the screw 300 passes through a plurality of recesses 85 and the extension rib 84 in one rotation, the juicing target can be processed more quickly and effectively. In addition, juicing is performed while the juicing target processed to a suitable size is conveyed downwards to the juicing zone through the spiral ribs 310.

Since a zone where actual cutting/processing of foodstuffs takes place has a height at which the screw rotates, it is desirable that the hopper rib 83 be placed at a height that allows interaction of the hopper rib 83 with the screw 300 at a lower portion of the inner wall of the hopper 80.

The screw 300 may include a plurality of spiral ribs 310 formed on a body thereof and having various heights in the form of threads to convey the juicing target downwards through the spiral ribs 310 upon rotation thereof.

In addition, the screw 300 may include a crushing portion 320 spaced apart from the screw shaft 350 and extending upwards to one side in a radial direction of the screw 300 and cutting the juicing target.

Further, the crushing portion 320 may include a beveled surface 321 that extends above an upper end of the screw shaft and guides an incoming juicing target, a cutting portion 321a that has an inclined angle with respect to the screw shaft to cut the juicing target, and a conveying surface 322 that conveys the juicing target in the rotational direction of the screw.

The cutting portion 321a is disposed at one side of the beveled surface 321 in the rotational direction of the screw to cut the juicing target through rotation of the screw.

In addition, the cutting portion 321a of the screw 300 may be placed above the spiral ribs 310 of the screw 300 to firstly cut the juicing target before the juicing target is cut through the spiral ribs 310.

In addition, the conveying surface 322 of the crushing portion 320 may be provided at a distal end thereof with an inclined surface 322a inclined downwards in an inward direction such that the juicing target conveyed through the inclined surface 322a can be conveyed in a downward direction of the screw 300.

Unlike the juicers according to the above embodiments, the spiral ribs 310 are separated from the crushing portion 320 instead of extending therefrom, thereby providing an additional space capable of accommodating the juicing target.

In addition, a polygonal-shaped cutting surface 310b can crush the juicing target while dragging the juicing target through a separation zone, thereby preventing the juicing target from escaping from the juicer while improving crushing efficiency.

With this structure, the juicer can efficiently convey the juicing target downwards to be juiced and can crush large materials that have not been processed in the crushing portion 320 again, thereby achieving significant reduction in load on the screw 300 due to overfeeding.

In addition, the juicer according to this embodiment can increase the speed of conveying the juicing target to the juicing zone by securing an additional space in which the juicing target will be accommodated, thereby providing an effect of eliminating a phenomenon of material stagnation in a lower zone of the hopper.

Furthermore, without the configuration of the guide spiral rib, the beveled surface 321 of the crushing portion 320 may be formed to a great thickness, thereby improving rigidity of the crushing portion 320 while preventing the screw from being broken due to pressure.

A typical screw includes an upper blade protruding in a horn shape to stab and crush a juicing target as a main purpose. However, since the typical screw has a stabbing and crushing structure, the typical screw has a problem in that the juicing target can be stabbed to form only holes without being crushed and can run idle and, even if the juicing target is crushed into multiple pieces, the crushed pieces run idle in an upper zone of the screw instead of being conveyed downwards. To prevent this problem, since the screw 300 according to this embodiment cuts the juicing target while allowing the cut/crushed juicing target to be settled on the conveying surface and conveyed downwards, the screw 300 can minimize scattering of the crushed juicing target and can secure stable juicing by smoothly conveying the juicing target to the juicing zone.

In addition, the screw shaft 350 may have a protruding upper end to prevent overfeeding of a juicing target to a juicing zone when the juicing target is conveyed along the beveled surface 321.

Further, the upper end of the screw shaft 350 may be placed lower than the uppermost end of the crushing portion 320.

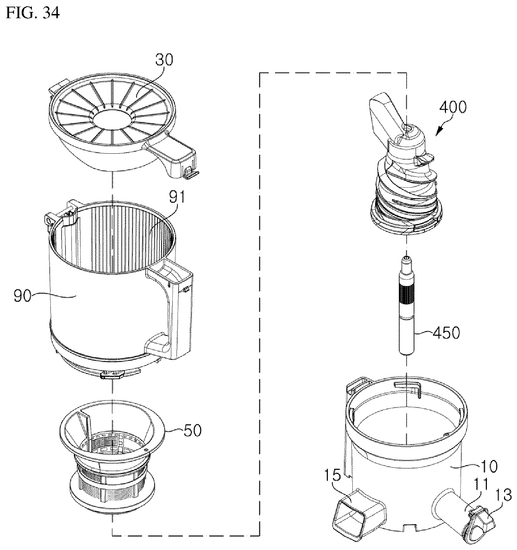

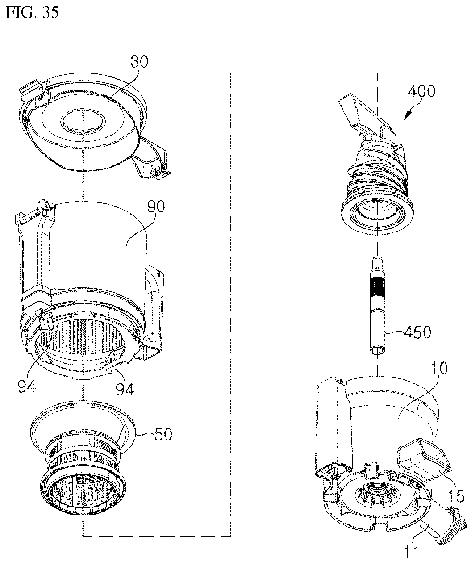

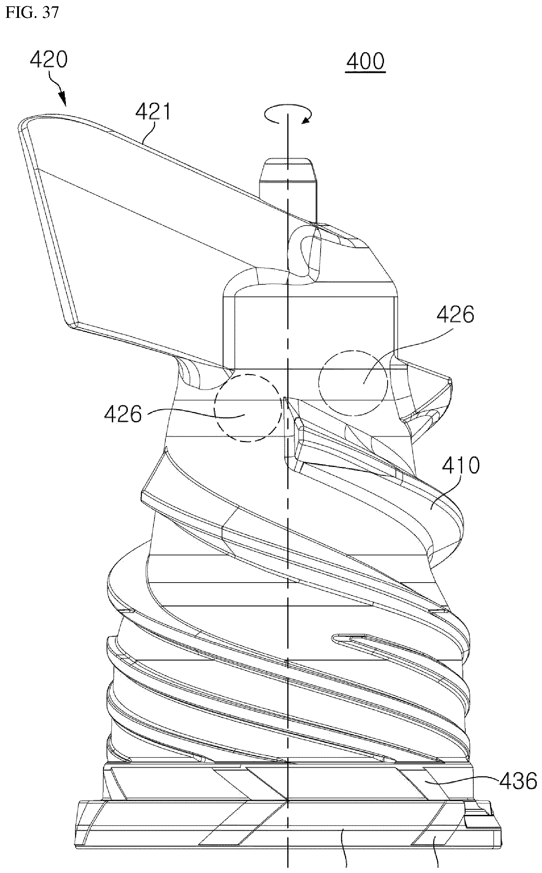

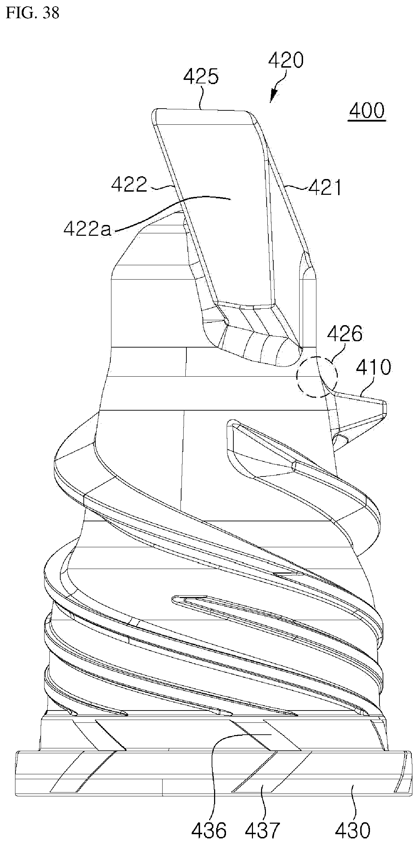

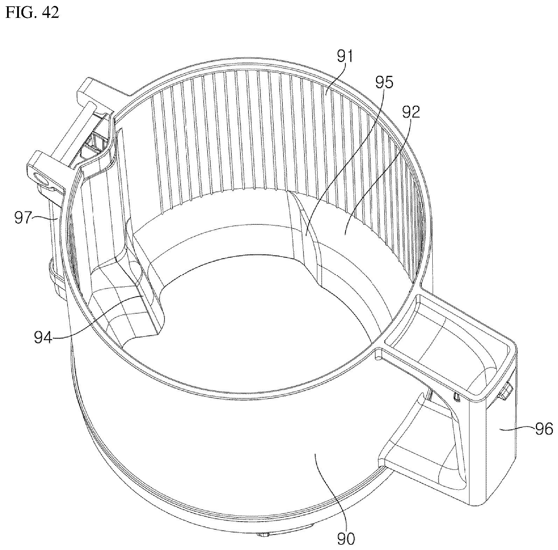

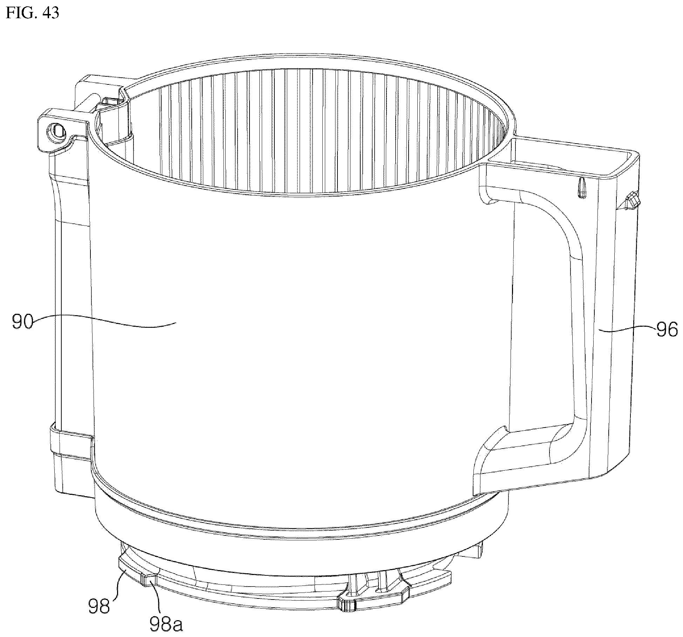

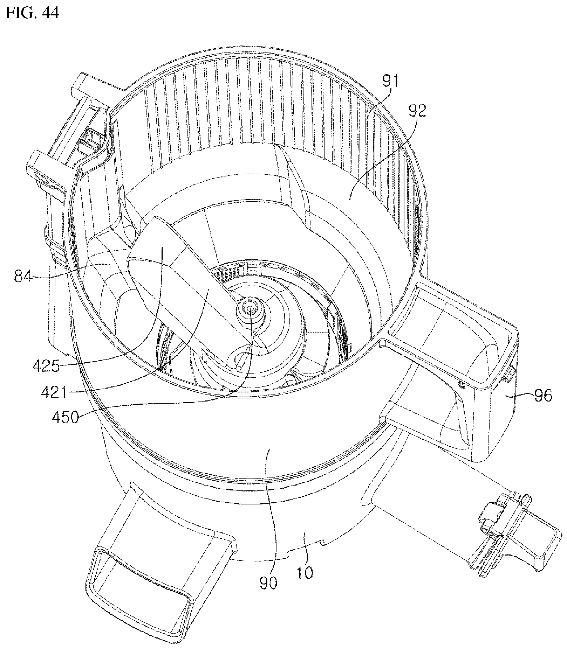

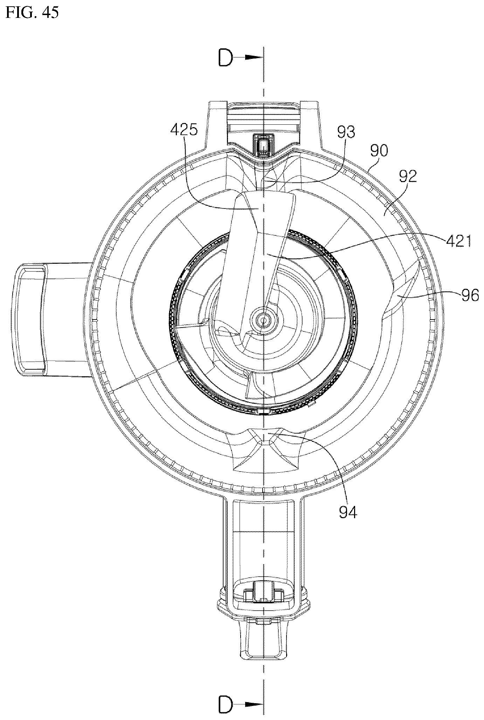

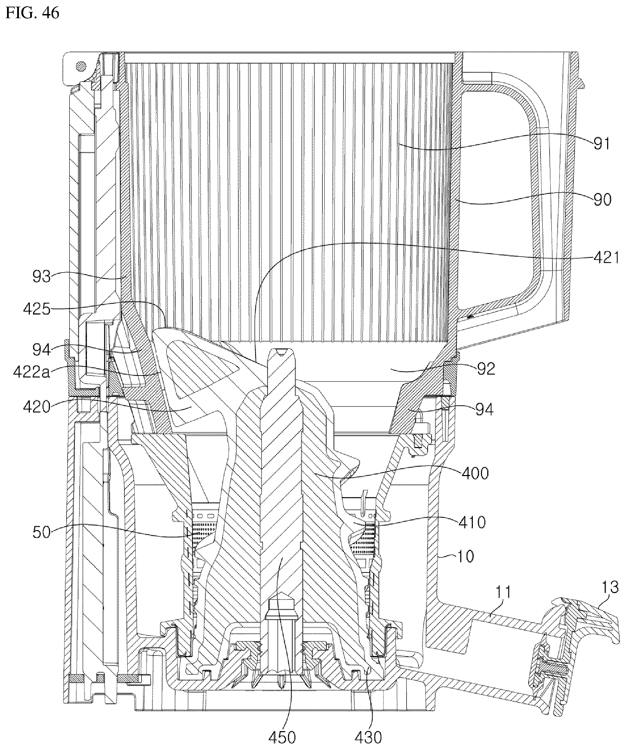

Next, referring to FIG. 34 to FIG. 47, a juicer according to yet another embodiment of the present invention includes: a juicing drum 10, which receives a filter sieve 50 therein and is coupled to an upper end of a main body (not shown); a hopper 90 coupled to an upper side of the juicing drum 10, a lid being coupled to the hopper 90 to allow a juicing target to be fed to the hopper 90 through the lid; and a screw 300 received inside the filter sieve 50 to rotate about a screw shaft 450 and formed with a spiral rib 410 on an outer circumferential surface thereof to crush the juicing target received from the hopper 90.

In addition, the screw 400 may include a crushing portion 420 spaced apart from the screw shaft 450 and extending upwards to one side in a radial direction thereof to cut the juicing target.

Further, the crushing portion 420 may convey the juicing target in the rotational direction of the screw.

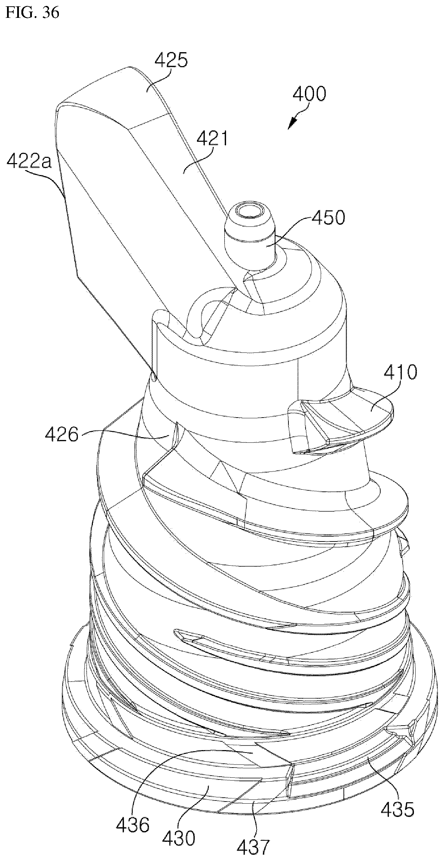

Here, as shown in FIG. 36 to FIG. 38, an upper end of the spiral rib 410 may be spaced apart at one side thereof from a lower end of one side of the crushing portion 420 by a certain distance to form a conveying space 426, through which the juicing target crushed in the cutting portion can be conveyed to the spiral rib 410 without stagnation.

That is, by widening the conveying space compared to a typical screw, the juicing target crushed in an upper cutting portion can be easily conveyed towards the spiral rib 410 without stagnation.

In addition, the screw 400 may be formed on an outer surface of a lower end thereof with a flange 430 having a greater width than a diameter of the screw 400 to allow the filter sieve 50 to be seated thereon

In addition, the flange 430 may be provided on an upper surface thereof with at least one discharge hole 435 to discharge the juicing target processed between the screw 400 and the filter sieve 50.

In addition, the screw 400 may be formed at the lower end thereof with a discharge protrusion 436 in the rotational direction thereof to perform additional crushing of the juicing target.

In addition, the flange 430 may be formed with a rib 437 in a direction opposite to the rotational direction of the screw to facilitate additional cutting of the juicing target and residue discharge after conveying the juicing target to an upper end thereof.

The rib 437 serves to convey a juicing material, which has been conveyed down to the flange 430 back up to the upper end (toward the discharge hole) instead of being discharged through the discharge hole 435. Without the rib 437, the juicing target conveyed down to the flange 430 can be accumulated in a lower portion of the juicing drum 10 and cannot be discharged.

Therefore, in order to send the juicing target back to an upper side with the discharge hole 435, the rib 437 is formed in a reverse direction opposite to the rotational direction of the screw to guide the juicing target back to the discharge hole 435 such that the juicing target can be squeezed once more in this process, thereby securing much better discharge efficiency.

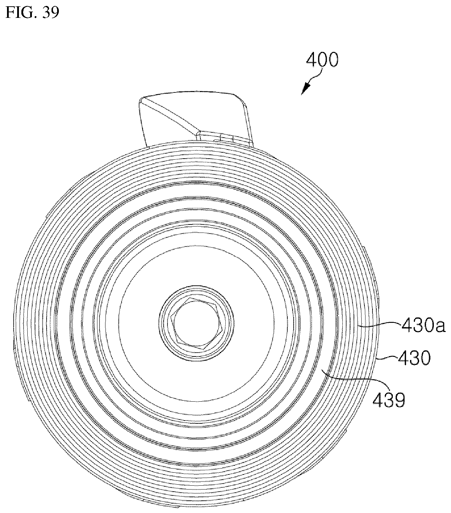

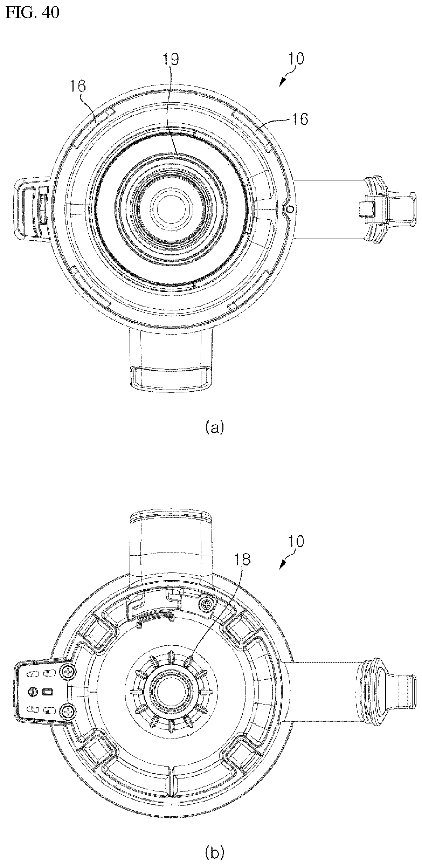

In addition, as shown in FIG. 39 and FIG. 40, the flange 430 may be formed at a lower end thereof with a seating groove 439 and the juicing drum 10 may be provided with a seating protrusion 19 corresponding to the seating groove 439 of the flange 430.

With this structure, the juicer can prevent residue from entering the screw 400 and can stably support the screw 400 away from the juicing drum 10.

Furthermore, the flange 430 may be provided on a lower surface thereof with at least one irregularity 430a, which is formed in the form of bumps and grooves to prevent residue from entering the screw.

FIG. 40(a) is a plan view of the juicing drum 10 and FIG. 40(b) is a bottom view of the juicing drum 10.

The juicing drum 10 may be formed on a bottom surface thereof with a guide rib 18 around a lower end axis of the juicing drum 10 to guide a coupling position when coupled to the main body.

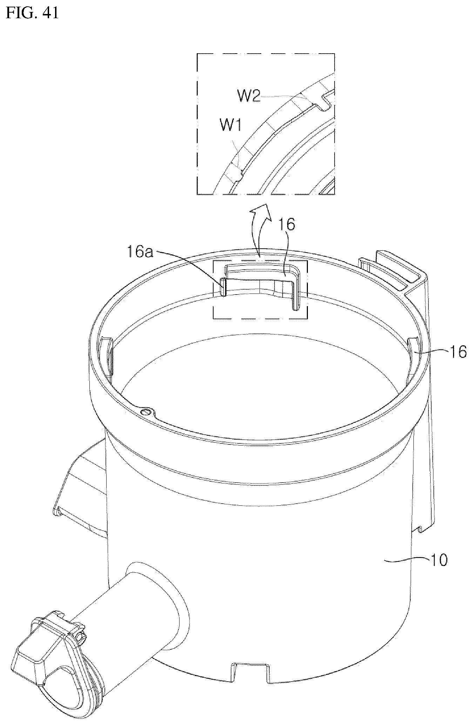

In addition, as shown in FIG. 41 to FIG. 46, the juicing drum 10 may be provided at an upper end thereof with a hopper coupler 16 coupled to the hopper 90. The hopper coupler 16 may have a thickness gradually increasing in the rotational direction of the screw.

In other words, a thickness W1 of a front side of the hopper coupler 16 in the rotational direction is less than a thickness W2 of a rear side thereof in the rotational direction and the thickness of the hopper coupler 16 gradually increases in the rotational direction.

In this structure, when the hopper 90 is engaged with the juicing drum 10, the thickness of the hopper coupler 16 gradually increases in the rotational direction to allow the hopper 90 to be rotated and secured thereto through surface contact therewith.

Further, the hopper coupler 16 of the juicing drum 10 may be formed with an anti-releasing jaw 16a to prevent the hopper 90 from rotating in a reverse direction.

Further, the hopper 90 may be provided at a lower end thereof with a coupler 98, which engages with the hopper coupler 16 of the juicing drum, and with a projection 98a, which is formed corresponding to the anti-releasing jaw 16a of the hopper coupler 16 to be caught thereby.

With this structure, the hopper 90 forms a beveled surface to facilitate engagement with the juicing drum in the rotational direction. Accordingly, when the hopper 90 is brought into contact with the anti-releasing jaw 16a of the juicing drum for engagement with the juicing drum, the beveled surface formed in the rotational direction allows the hopper 90 to be engaged therewith beyond the anti-releasing jaw 16a while moving along the beveled surface, and when the hopper 90 is rotated in a reverse direction, the anti-releasing jaw 16a free from a beveled surface blocks the hopper 90 from rotating in the reverse direction until a certain force is exceeded.

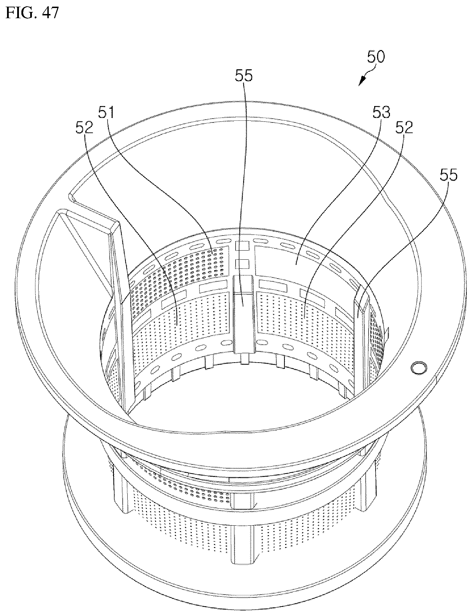

Further, as shown in FIG. 47, the filter sieve 50 is formed at an upper side thereof with a plurality of upper mesh pores 51 and at a lower side thereof with a plurality of lower mesh pores 52.

The upper mesh pores 51 may be formed in a smaller distribution ratio than the lower mesh pores 52.

Further, the upper mesh pores 51 may have a larger size than the lower mesh pores 52.

In addition, the filter sieve 50 may include a mesh-pore free surface 53, which is not provided with ribs 55 formed on a side surface of the filter sieve 50.

The mesh-pore free surface 53 is formed in a higher ratio at the upper side of the filter sieve 50 than at the lower side thereof.

With this structure, the juicer can prevent pulp from clogging the mesh pores in a crushing zone upon juicing of the juicing target and can ensure reliable pulp discharge.

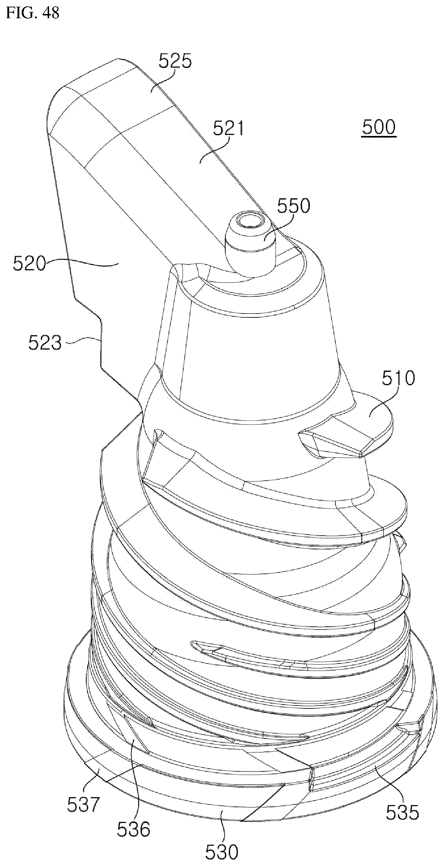

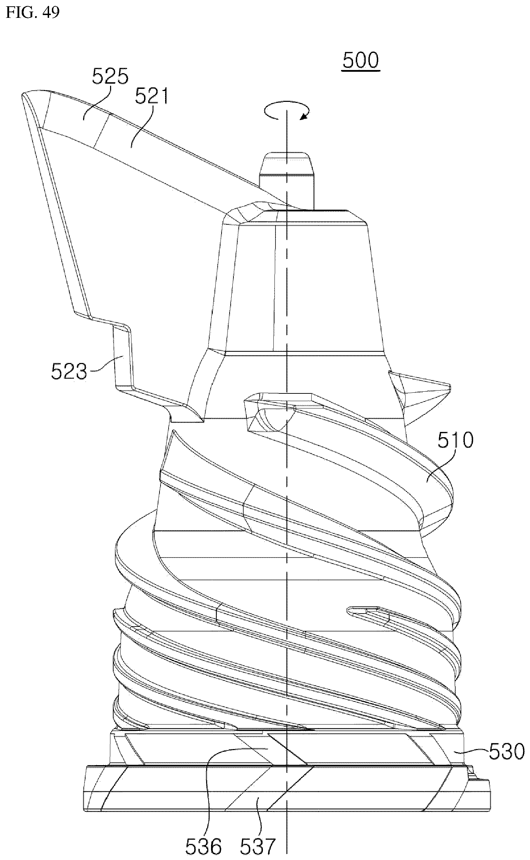

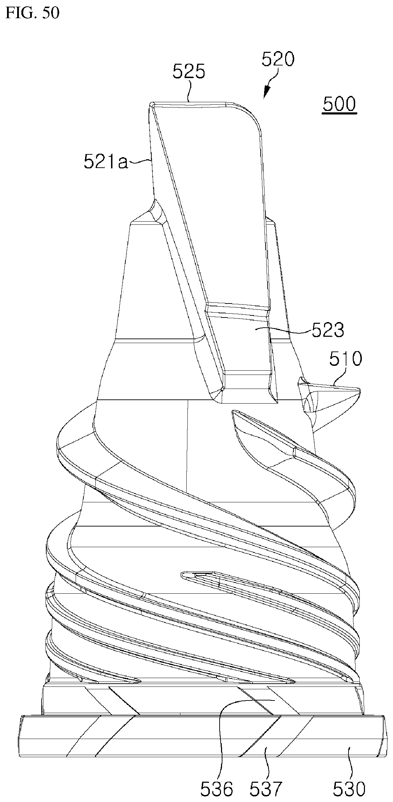

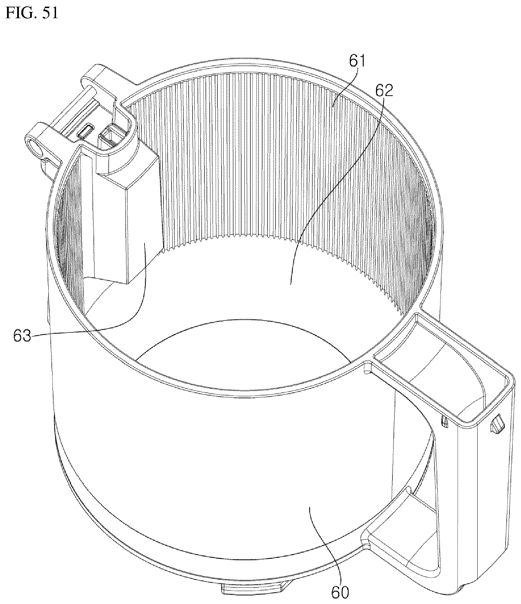

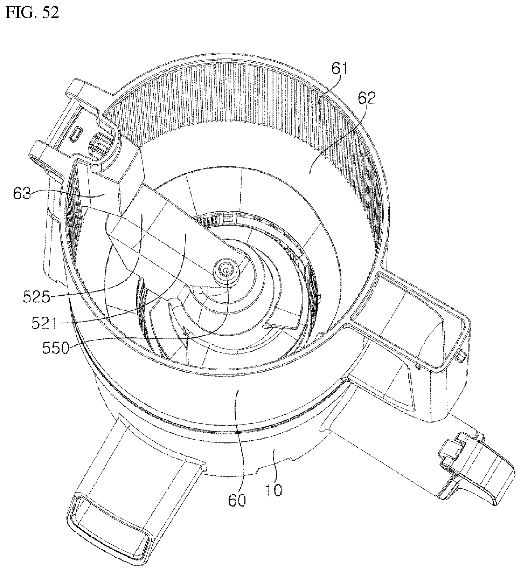

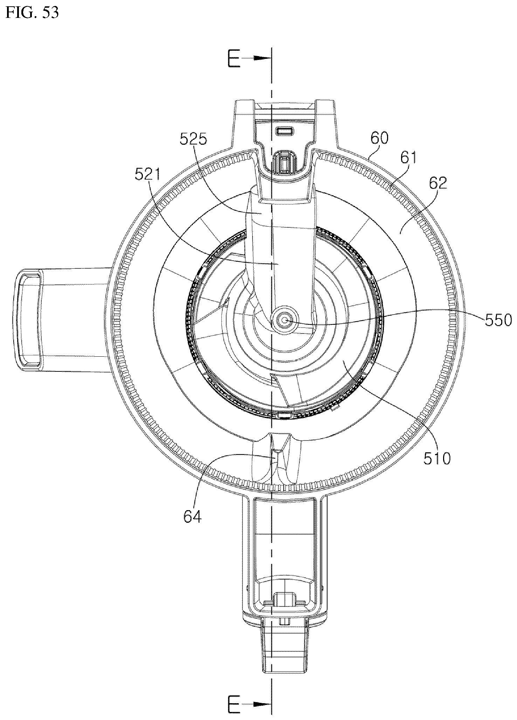

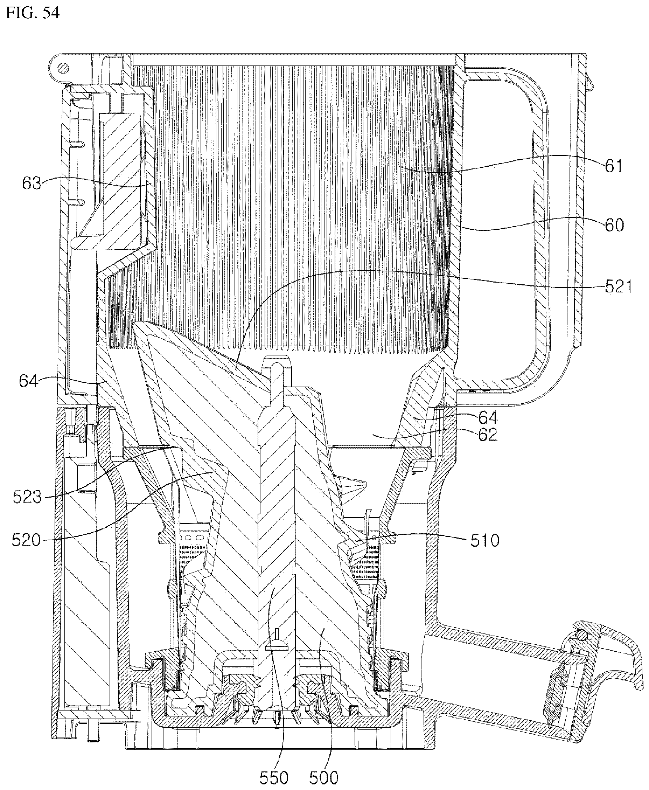

Referring to FIG. 48 to FIG. 54, in a juicer according to yet another embodiment of the present invention, a screw 500 may rotate about a screw shaft 550 and may include a spiral rib 510 on an outer circumferential surface thereof.

The screw 500 may also include a crushing portion 520 spaced apart from the screw shaft 550 and extending upwards in a radial direction thereof to crush a juicing target.

Further, the crushing portion 520 may include a beveled surface 521 extending above an upper end of the screw shaft 550 and guiding an incoming juicing target and a conveying surface 522 conveying the juicing target in the rotational direction of the screw.

The beveled surface 521 may guide the juicing target placed in an open space defined in an inner space of the hopper at an upper end of the screw shaft to the conveying surface 522 of the crushing portion 520.

Further, the crushing portion 520 is provided at one side thereof with a crushing recess 523 to cut the juicing target corresponding to a hopper rib 63 of the juicer.

That is, the crushing recess 523 may be formed at one side of a lower end of the conveying surface 522 of the screw 500.

With this structure, the juicer can firstly cut a juicing target through the cutting portion of the crushing portion 520, secondly cut the juicing target through the crushing recess 523 and the hopper rib 63, convey the juicing target through the conveying surface 522, and thirdly crush the juicing target through the spiral rib 510.

As such, according to the present invention, the structure for crushing the juicing target in advance is provided to the hopper and the screw, thereby eliminating inconvenience of cutting the juicing target in advance before feeding the juicing target, while enabling efficient feeding and conveying of juicing materials.

In addition, according to the present invention, the crushing portion extends from an upper end of the screw, which rotates at low speed, thereby reducing crushing load by crushing a juicing target before the juicing target reaches the spiral rib of the screw.

Although some embodiments have been described herein, it should be understood that these embodiments are provided for complete disclosure and thorough understanding of the present invention by those skilled in the art and are not to be in any way construed as limiting the present invention. In addition, it will be apparent to those skilled in the art that various modifications, changes, and alterations can be made without departing from the spirit and scope of the invention. Therefore, the claims and their equivalents are intended to cover such modifications and the like as would fall within the scope and spirit of the invention.

### <List of Reference numerals>

10: Juicing drum
11: Juice discharge port
15: Residue discharge port
19: Seating protrusion
20, 60, 80, 90: Hopper
21: Bump
22: Guide surface
23: Hopper rib
24: Extension rib
30: Lid
31: Coupler
32: Feeding port
50: Filter sieve
100, 200, 300, 400, 500: Screw
110, 210, 310, 410, 510: Spiral rib
110b, 210b, 310b, 410b, 510b: Cutting surface
111, 211: Guide spiral rib
120, 220, 320, 420, 520: Crushing portion
121, 221, 321, 421, 521: Beveled surface
121a, 221a, 321a, 421a, 521a: Cutting portion
122, 222, 322, 422, 522: Conveying surface
122a, 222a, 322a, 422a, 522a: Inclined surface
123: Crushing recess
125: Flow path
130, 230, 330, 430, 530: Flange
135, 235, 335, 435, 535: Discharge hole
150, 250, 350, 450, 550: Screw shaft
436, 536: Discharge protrusion
437, 537: Rib
439: Seating groove

## Claims

1. A screw for juicers adapted to rotate about a screw shaft and having a spiral rib on an outer circumferential surface thereof, the screw comprising:
a crushing portion spaced apart from the screw shaft and extending upwards to one side in a radial direction to cut a juicing target,
wherein the crushing portion comprises a beveled surface extending above an upper end of the screw shaft and guiding an incoming juicing target, and a cutting portion having an inclined angle relative to the screw shaft to cut the juicing target.

2. . The screw for juicers according to claim 1, wherein the crushing portion has a greater length than a radius of the screw to form an accommodation space so as to crush the juicing target while receiving the juicing target.

3. . The screw for juicers according to claim 1, wherein the crushing portion comprises a conveying surface conveying the juicing target in a rotational direction of the screw.

4. . The screw for juicers according to claim 3, wherein an upper end of the spiral rib is connected at one side thereof to a lower end of one side of the crushing portion to guide the juicing target conveyed on the conveying surface to the spiral rib.

5. . The screw for juicers according to claim 3, wherein the upper end of the spiral rib is spaced apart at one side thereof from the lower end of one side of the crushing portion by a certain distance to form a conveying space and the juicing target crushed by the cutting portion is conveyed to the spiral rib through the conveying space without stagnation.

6. . The screw for juicers according to claim 1, wherein the upper end of the spiral rib forms a cutting surface at the other side thereof to crush the juicing target while preventing the juicing target from escaping.

7. . The screw for juicers according to claim 1, wherein the crushing portion is further provided at one side thereof with a crushing recess to cut the juicing target.

8. . The screw for juicers according to claim 1, wherein the cutting portion of the screw is placed above the spiral rib of the screw to cut the juicing target before cutting through the spiral rib and the beveled surface is formed at one end thereof with a flow path.

9. . The screw for juicers according to claim 3, further comprising:
a guide spiral rib formed on the spiral rib of the screw,
wherein the guide spiral rib guides the juicing target firstly cut through the cutting portion of the crushing portion to be conveyed to the conveying surface and the conveying surface conveys the juicing target guided through the guide spiral rib.

10. . The screw for juicers according to claim 3, wherein the conveying surface of the crushing portion is provided at a distal end thereof with an inclined surface inclined downwards in an inward direction such that the juicing target conveyed through the inclined surface is conveyed in a downward direction of the screw.

11. . The screw for juicers according to claim 1, further comprising:
a flange formed on an outer surface of a lower end of the screw and having a greater width than a diameter of the screw to allow a filter sieve to be seated thereon,
wherein the flange is provided on an upper surface thereof with at least one discharge recess to discharge the juicing target processed between the screw and the filter sieve.

12. . The screw for juicers according to claim 1, further comprising:
a discharge protrusion formed at the lower end thereof in a rotational direction to perform additional crushing of the juicing target.

13. . The screw for juicers according to claim 11, wherein the flange is formed with a rib in a direction opposite to the rotational direction to facilitate additional cutting and discharge of the juicing target after conveying the juicing target to an upper end thereof.

14. . A juicer comprising:
a juicing drum receiving a filter sieve therein and coupled to an upper end of a main body of the juicer;
a hopper comprising a hopper rib coupled to an upper side of the juicing drum and protruding from an inner surface thereof in a radial direction of the hopper, a lid being coupled to the hopper to allow a juicing target to be fed to the hopper through the lid; and
a screw received inside the filter sieve to rotate about a screw shaft and formed with a spiral rib on an outer circumferential surface thereof to crush the juicing target received from the hopper,
the screw comprising: a crushing portion spaced apart from the screw shaft and extending upwards to one side in a radial direction to cut the juicing target,
wherein the crushing portion comprises a beveled surface extending above an upper end of the screw shaft and guiding the juicing target being fed to the hopper, and a cutting portion having an inclined angle relative to the screw shaft to cut the juicing target.

15. . The juicer according to claim 14, wherein the crushing portion has a greater length than a radius of the screw to form an accommodation space so as to crush the juicing target while receiving the juicing target.

16. . The juicer according to claim 14, wherein the crushing portion comprises a conveying surface conveying the juicing target in a rotational direction of the screw.

17. . The juicer according to claim 16, wherein an upper end of the spiral rib is connected at one side thereof to a lower end of one side of the crushing portion to guide the juicing target conveyed on the conveying surface to the spiral rib.

18. . The juicer according to claim 16, wherein the upper end of the spiral rib is spaced apart at one side thereof from the lower end of one side of the crushing portion by a certain distance to form a conveying space and the juicing target crushed by the cutting portion is conveyed to the spiral rib through the conveying space without stagnation.

19. . The juicer according to claim 14, wherein the upper end of the spiral rib forms a cutting surface at the other side thereof to crush the juicing target while preventing the juicing target from escaping from the juicer.

20. . The juicer according to claim 14, wherein the crushing portion is further provided at one side thereof with a crushing recess having a shape corresponding to the hopper rib to cut the juicing target.

21. . The juicer according to claim 14, wherein the cutting portion of the screw is placed above the spiral rib of the screw to cut the juicing target before cutting through the spiral rib and the beveled surface is formed at one end thereof with a flow path.

22. . The juicer according to claim 16, wherein the screw further comprises: a guide spiral rib formed above the spiral rib of the screw,
the guide spiral rib guiding the juicing target firstly cut through the cutting portion of the crushing portion to be conveyed to the conveying surface such that the conveying surface conveys the juicing target guided through the guide spiral rib.

23. The juicer according to claim 16, wherein the conveying surface of the crushing portion is provided at a distal end thereof with an inclined surface inclined downwards in an inward direction such that the juicing target conveyed through the inclined surface is conveyed in a downward direction of the screw.

24. . The juicer according to claim 14, wherein the screw further comprises a flange formed on an outer surface of a lower end thereof and having a greater width than a diameter of the screw to allow the filter sieve to be seated thereon; and
the flange is provided on an upper surface thereof with at least one discharge recess to discharge the juicing target processed between the screw and the filter sieve.

25. . The juicer according to claim 14, wherein the screw further comprises a discharge protrusion formed at the lower end thereof in a rotational direction to perform additional crushing of the juicing target.

26. . The juicer according to claim 24, wherein the flange is formed with a rib in a direction opposite to the rotational direction to facilitate additional cutting of the juicing target and residue and discharge after conveying the juicing target to an upper end thereof.

27. . The juicer according to claim 14, wherein the flange is provided at a lower end thereof with a seating groove and the juicing drum is provided with a seating protrusion corresponding to the seating groove.

28. . The juicer according to claim 14, wherein the flange is formed on a lower end surface thereof with at least one irregularity to prevent residue from entering the screw.

29. . The juicer according to claim 14, wherein the juicing drum is provided at an upper end thereof with a hopper coupler coupled to the hopper, the hopper coupler having a thickness gradually increasing in a rotational direction of the screw.

30. . The juicer according to claim 29, wherein the hopper coupler of the juicing drum is provided with an anti-releasing jaw to prevent the hopper from rotating in a reverse direction.

31. . The juicer according to claim 30, wherein the hopper is provided at a lower end thereof with a coupler coupled to the hopper coupler of the juicing drum and with a projection corresponding to the anti-releasing jaw.

32. . The juicer according to claim 14, wherein the juicing drum is formed on a bottom surface thereof with a guide rib around a lower end axis of the juicing drum to guide a coupling position when coupled to the main body.

33. . The juicer according to claim 14, wherein the filter sieve comprises a plurality of upper mesh pores formed at an upper side thereof and a plurality of lower mesh pores formed at a lower side thereof, the upper mesh pores being formed in a smaller distribution ratio than the lower mesh pores.

34. . The juicer according to claim 33, wherein the upper mesh pores have a larger size than the lower mesh pores.

35. . The juicer according to claim 33, wherein the filter sieve comprises at least one mesh-pore free surface.
